# EUROPÄISCHE PATENTSCHRIFT

(11) **EP 3 798 588 B1**
(45) Veröffentlichungstag und Bekanntmachung des Hinweises auf die Patenterteilung: **30.08.2023**
(21) Anmeldenummer: 20174901.7
(22) Anmeldetag: 15.05.2020
(51) Int. Cl.: G01G 21/24

(54) **MONOLITHISCHER WÄGEBLOCK**
MONOLITHIC WEIGHING BLOCK
BLOC DE PESAGE MONOLITHIQUE

(30) Priorität: 16.05.2019 DE 102019113001
(43) Veröffentlichungstag der Anmeldung: 31.03.2021
(73) Patentinhaber: WIPOTEC GmbH, 67657 Kaiserslautern (DE)
(72) Erfinder: Gottfriedsen, Jan, 67714 Waldfischbach-Burgalben (DE); Asal, Thorsten, 67657 Kaiserslautern (DE); Stellwagen, Tobias, 67659 Kaiserslautern (DE); Klingelhöfer, Jan-David, 67663 Kaiserslautern (DE)
(74) Vertreter: Eder Schieschke & Partner mbB

(56) Entgegenhaltungen:
- EP-A1- 2 610 596
- WO-A1-2017/180163
- DE-U1-202014 105 467

## Beschreibung

Die vorliegende Erfindung betrifft einen monolithischen Wägeblock und ein Verfahren zu dessen Herstellung.

Monolithische Wägeblöcke ("Monoblock") für Wägezellen sind aus dem Stand der Technik bekannt. Sie umfassen einen oder mehrere Lenker und einstückig damit verbundene weitere Komponenten einer Hebelmechanik, beispielsweise Parallellenker, einen Lastaufnehmer und einen als Festland bezeichneten Abschnitt. "Festland" benennt dabei einen Bereich des Wägeblocks, der im Betrieb im Wesentlichen ortsfest bleibt und zur Ausbildung der Stützstellen bzw. Schwenkpunkte von Hebeln dient. Auch eine Komponente der elektromagnetischen Kraftkompensation (meist ein Permanentmagnet), oder ein Positionsdetektor, wird vom Festland getragen.

Die monolithische Bauart vermeidet unter anderem Wärmespannungen, und ein etwaiger Fertigungsaufwand durch den Zusammenbau einzelner Komponenten des Wägeblocks entfällt. Allerdings ist die Bearbeitung eines solchen Wägeblocks nicht beliebig möglich, da einzelne Komponenten in einer ersten Richtung hintereinanderliegen können und durch entsprechende Schnitte senkrecht zu dieser Richtung voneinander getrennt werden müssen (Hinterschneidungen). Die Entfernung von Material aus dem Monoblock kann daher nur dort bzw. nur aus einer solchen Richtung erfolgen, in der eine andere Komponente den Zugang des Werkzeugs nicht behindert. Außerdem verleiht das nicht entfernte, funktionell jedoch überflüssige Material dem Monoblock unnötiges Gewicht, und die Herstellung von Hinterschneidungen ist aufwendig.

Die Fertigung der Monoblockstruktur ist im Stand der Technik begrenzt auf die Bearbeitung eines dreidimensionalen Körpers, dem gezielt Material entnommen wird, etwa durch Fräsen, Erodieren oder Bohren. Die verbleibenden Materialbereiche bilden einzelne, miteinander verbundene Elemente des Monoblocks aus. Da die Materialentnahme nicht an beliebigen Positionen innerhalb des Monoblocks möglich ist, sind auch die Gestaltungsspielräume zur Ausbildung der einzelnen Elemente, insbesondere zur Erzielung der nötigen Steifigkeit bei möglichst geringem Gewicht, begrenzt.

Aus der EP 2 610 596 A1 ist ein monolithischer Wägeblock als Brückenelement bekannt, bei dem ein Lastaufnehmer an zwei Hebeln angreift, die an einer gemeinsamen Kopplungsstelle eine Kraft in einen weiteren Hebel oder eine Komponente eines Kraftkompensationssystems einleiten können. Die Herstellung des Wägeblocks ist vergleichsweise einfach, da der Block von zwei gegenüberliegenden Seiten augenscheinlich vollständig bearbeitet werden kann.

Die DE 20 2014 105467 U1 offenbart eine monolithische Parallelogrammlenkerstruktur für eine Waage, wobei wenigstens einer der Parallellenker eine Ausnehmung aufweist, durch die ein Abschnitt des sogenannten Festlands hindurch ragt. Dies erhöht die Steifigkeit der Konstruktion. Die Ausbildung eines solchen Monoblocks ist aufgrund wenigstens einer im Bereich der Ausnehmung bestehenden Hinterschneidung aufwendig und teuer.

In der WO 2017/180163 A1 wird ein gedruckter Teil einer Wägezelle gezeigt, der eine Reihe von Dehnungsmeßstreifen enthält. Dehnungsmeßstreifen eignen sich nur für ausgewählte Anwendungsfälle der Wägetechnik, welche beispielsweise die Präzisionsvorteile der elektromagnetischen Kraftkompensation nicht nutzen können. Aufgabe der Erfindung war es daher, einen Monoblock und ein Verfahren zu seiner Herstellung anzubieten, mit dem dieser Nachteil überwunden werden kann.

Die Aufgabe wird gelöst durch einen Wägeblock nach Ansprüchen 1-6 und 8-10 und einem Verfahren nach Anspruch 12.

Die Erfindung beruht auf der Erkenntnis, einen Monoblock mit besonders geringem Gewicht herstellen zu können nach dem Prinzip der generativen Fertigung, auch bekannt als 3-D Druck. Dabei werden in einer Richtung, beispielsweise einer Längsrichtung X, nacheinander dünne Materialschichten aufeinander gelegt und miteinander verbunden, um so nach und nach einen räumlichen Körper auszubilden. Anders als im bisher bekannten Stand der Technik, bei dem Monoblöcke durch Materialentnahme aus einem Vollmaterial hergestellt werden, wird hier der Monoblock mit seinen Komponenten durch Materialzufügung schichtweise aufgebaut. In Versuchen konnte die Anmelderin überraschend feststellen, dass die hohen Anforderungen an die Maßgenauigkeit bei der Herstellung von Monoblöcken, die im Bereich von Mikrometern liegt, auch bei durch 3-D Druck hergestellten Monoblöcken erreicht werden kann. Gerade für die Ausbildung von Dünnstellen bzw. Gelenken, die bei herkömmlichen Monoblöcken oft durch eng nebeneinander liegende parallele Bohrungen erzeugt werden, konnte das Vorurteil geringer Fertigungsgenauigkeit im 3-D Druck widerlegt werden. Die Nutzung des 3-D Drucks in der speziellen Anwendung für Monoblöcke bietet mehrere signifikante Vorteile:
- Bei den bekannten Monoblöcken lässt sich funktionell überflüssiges Material nur bedingt entfernen, da bestimmte Komponenten des Wägeblocks den Zugang der Werkzeuge erschweren bzw. verhindern. Entsprechend sind die Wägeblöcke schwerer als nötig. Dickere Materialbereiche wärmen sich bei Änderung der Umgebungstemperatur außerdem langsamer auf oder kühlen langsamer ab als dünnere Materialbereiche, sodass unnötig Zeit vergeht, bis stationäre Betriebsbedingungen erreicht sind. Ein erfindungsgemäß hergestellter Monoblock weist nur dort Material auf, wo es funktionell erforderlich ist, sodass das Gesamtgewicht auf ein Minimum reduziert wird. Die Ausbildung der einzelnen Komponenten des Monoblocks als Stabwerk oder jedenfalls mit möglichst kleinen Einzelquerschnitten reduziert außerdem die Empfindlichkeit bei Temperaturänderungen.
- Bisher war es nötig, den Rohblock mit Werkzeugen (insbesondere Fräswerkzeugen) von unterschiedlichen Seiten her zu bearbeiten, um Material entnehmen und insbesondere die einzelnen Komponenten innerhalb des Wägeblocks aus dem Vollen heraus fräsen zu können. Diese aufwändige Bearbeitung kann erfindungsgemäß entfallen.
- Häufig lassen sich komplexere Wägeblöcke (beispielsweise mit mehr als einem Hebel) nicht ohne Hinterschneidungen im Block herstellen. Dazu muss Material im Blockinneren in einer ersten und anschließend einer dazu senkrechten zweiten Richtung entfernt werden. Um in beiden Fällen mit dem Werkzeug die Bearbeitungsposition erreichen zu können sind häufig Bearbeitungsöffnungen in anderen Komponenten des Wägeblocks, insbesondere den Parallellenkern, erforderlich, die deren Festigkeit schwächen. Im 3-D Druck dagegen können die Hinterschneidungen gebildet werden durch Zonen, in denen keine Materialschicht aufgebaut wird. Die Werkzeugzuführung zur Materialentnahme ist hier nicht nötig.

- Aufgrund der hohen Fertigungspräzision lassen sich die einzelnen Komponenten des Monoblocks mittels 3-D Druck sehr eng aneinander liegend ausbilden, so dass die Zwischenräume kleiner ausfallen können als dies mit herkömmlichen Werkzeugen überhaupt herstellbar wäre. Zwar ist zur Herstellung dünner Schnitte in Monoblöcken auch das Erodieren bekannt, hierfür müssen die Schnitte jedoch durch den ganzen Block geführt werden, was die Konstruktionsfreiheit erheblich einschränkt.
- Die einzelnen Komponenten des Wägeblock lassen sich so herstellen, dass sie einander durchdringen bzw. einen Teil des Wägeblockvolumens gemeinsam ausnutzen. Das ist insbesondere möglich durch Ausbildung der Komponenten mit Ausnehmungen oder als Stabwerke, wobei Abschnitte des einen Stabwerks innerhalb von Abschnitten des anderen Stabwerks erstellt werden können. Diese Technik, bei der eine Vielzahl von Hinterschneidungen entsteht, ist im Stand der Technik für Monoblöcke nicht bekannt.

Ein erfindungsgemäßer Wägeblock erstreckt sich in einer Längsrichtung X, einer dazu orthogonalen Querrichtung Y und einer zu diesen beiden Richtungen wiederum orthogonalen Höhenrichtung Z. Der Wägeblock umfasst an einem ersten Blockende einen Festlandabschnitt, der insbesondere zur Abstützung von Lenkern oder Hebeln vorgesehen ist. Auch Teile eines Kraftkompensationssystems können am Festland befestigt sein. Außerdem weist der Wägeblock zwei Lenker auf, die sich in Längsrichtung X erstrecken und jeweils mit ihrem ersten Ende über ein Stützgelenk mit dem Festland verbunden sind. An ihrem dem ersten Ende gegenüberliegenden zweiten Ende greifen die beiden Lenker an einem gemeinsamen Lastaufnehmer an, der mittels der Lenker in Höhenrichtung Z relativ zum Festland parallel geführt wird. Der Lastaufnehmer dient zur Aufnahme einer in Höhenrichtung Z eingeleiteten Gewichtskraft. Ein solches System, welches in einer einfachsten Form ohne kraftübersetzende Hebel auskommt, wird als direkt tragendes System bezeichnet, wobei die durch eine Gewichtskraft verursachte Bewegung des Lastaufnehmers kompensiert wird durch eine Gegenkraft, die über ein Kraftkompensationssystem erzeugt wird. Beispielsweise eine Spule als Teil dieses Kraftkompensationssystems kann dann unmittelbar am Lastaufnehmer angeordnet sein.

Bereits ein solches System ohne Hebel gestattet im 3-D Druck die Ausbildung seiner Komponenten mit möglichst geringem Gewicht. Außerdem könnte beispielsweise das Festland, welches zur Aufnahme des zum Kraftkompensationssystem gehörenden Magneten bis in den Bereich der Spule am Lastaufnehmer ausgebildet sein muss, die Lenker durchdringen. Festland und Lenker können so teilweise ineinanderliegend ausgebildet werden, wobei einzelne Stäbe, Streben oder sonstige Materialbereiche des Lenkers nur minimalen Abstand zu denjenigen des Festlandes aufweisen müssen.

Eine bevorzugte Ausführungsform des Wägeblocks umfasst wenigstens einen ersten Hebel, der sich (vorzugsweise in Längsrichtung X) zwischen einem ersten Endbereich und einem zweiten Endbereich erstreckt (diese Erstreckungsrichtung, entlang derer der Hebel Hebelarme zur Veränderung von Kräften ausbildet, kann auch als Haupterstreckungsrichtung bezeichnet werden). Am ersten Endbereich ist der Hebel über ein Koppelelement mit dem Lastaufnehmer verbunden, um die Weiterleitung einer Kraft vom Lastaufnehmer in den Hebel zu gewährleisten. Das Koppelelement umfasst wenigstens ein Lastgelenk, sodass ein Abschnitt des Koppelelements relativ zum Hebel oder zum Lastaufnehmer um eine durch das Lastgelenk gebildete Schwenkachse schwenkbar ist. Ebenfalls am ersten Endbereich ist der erste Hebel außerdem über ein Stützgelenk mit dem Festland verbunden, wobei auch das Stützgelenk eine Schwenkachse ausbildet. Die Ausführung mit wenigstens einem Hebel lässt sich besonders gut mittels 3-D Druck herstellen, da sich hier die vorgenannten Vorteile voll auswirken.

Der Begriff "Stützgelenk" bezeichnet im weiteren Gelenke, die ein bewegliches Teil des Monoblocks, insbesondere einen Hebel oder einen Lenker, mit dem Festland verbinden bzw. daran abstützen. Als "Lenkergelenk" sollen diejenigen Gelenke bezeichnet werden, über die die Lenker mit dem Lastaufnehmer verbunden sind. Über ein "Lastgelenk" werden zwei bewegliche Abschnitte des Wägeblocks miteinander verbunden. Insbesondere wird der Lastaufnehmer über ein oder mehrere Lastgelenke mit einem Ende eines Hebels verbunden, und auch die Verbindung von Hebeln untereinander erfolgt über Lastgelenke. Ein Lastgelenk ist in der Regel Teil eines Koppelelements.

Alle diese Gelenke bilden jeweils eine Schwenkachse aus, um die die beiden über das Gelenk miteinander verbundenen Abschnitte relativ zueinander schwenkbar sind.

Eine besonders bevorzugte Ausführungsform der Erfindung sieht vor, dass ein Lastgelenk als Kreuzfedergelenk ausgebildet ist. Dabei werden die beiden gelenkig miteinander zu verbindenden Abschnitte über wenigstens zwei Materialstege miteinander verbunden, die einander im Bereich der Schwenkachse vorzugsweise nicht berühren und wobei einer der Materialstege in einer Projektion entlang der Schwenkachse einen Winkel (α :# 0°) mit dem anderen Materialsteg bildet. Anders als bei sogenannten Dünnstellengelenken wird hier die Schwenkachse erzeugt durch zwei in Achsenrichtung hintereinanderliegende, einander kreuzende Materialstege. Vorzugsweise liegt der Kreuzungswinkel im Bereich 45° < α < 135° höchst vorzugsweise bei genau 90°.

Aufgrund der in Achsrichtung hintereinander liegenden Materialstege sind Kreuzfedergelenke nicht ohne Hinterschneidungen in Richtung ihrer Schwenkachse herstellbar. Zugleich haben die gekreuzten Materialstege eine horizontale bzw. vertikale Ausdehnung quer zur Schwenkachse, das Gelenk nimmt also quer zur Schwenkachse einen gewissen Raum ein. Ein Lastgelenk, über welches eine Kraft an einem Hebelendbereich in den Hebel eingeleitet wird, ist zweckmäßigerweise in Längsrichtung des Hebels sehr nahe bei einem den Hebel abstützendes Stützgelenk angeordnet, um dadurch einen kurzen Hebelarm bzw. eine ausreichend hohe Hebelübersetzung erzielen zu können, und die Schwenkachse beider Gelenke verlaufen dabei parallel . Die Ausbildung des Lastgelenks als Kreuzfedergelenk steht jedoch der Ausbildung des eng benachbarten Stützgelenks im Wege, solange die beiden Gelenke auf herkömmliche Weise, nämlich durch Materialentnahme aus einem monolithischen Block hergestellt werden. Gelenke werden dort nämlich meist durch Bohrungen in Schwenkachsenrichtung ausgebildet, deren Durchmesser den Mindestabstand zu einem benachbarten weiteren Gelenk bestimmen. Ein auf diese Weise erzeugtes Kreuzfedergelenk könnte nur dann in geringerem Achsabstand zu einem weiteren Gelenk ausgebildet werden, wenn die beiden Gelenke in Achsrichtung versetzt zueinander hintereinander lägen. Dann aber durchdringen die Bohrungen des einen Gelenks den Bauraum des anderen Gelenks, was nur durch aufwendige Hinterschneidungen verhindert werden könnte. Der generative Aufbau des erfindungsgemäßen Wägeblocks gestattet hingegen die Ausbildung von Stützgelenk und Lastgelenk in geringem Abstand zueinander, während zugleich die Vorteile des Kreuzfedergelenks für das Lastgelenk nutzbar sind. Besonders vorteilhaft wirkt sich dies aus, wenn auch das am gleichen Hebel-Endbereich wie das Lastgelenk vorgesehene Stützgelenk des Hebels als Kreuzfedergelenk der vorgenannten Art ausgebildet wird. Beide Gelenke liegen dabei mit Blick entlang ihrer (parallel zueinander verlaufenden) Schwenkachsen hintereinander, und ihre Ausdehnung quer zur jeweiligen Schwenkachse ist dann größer als der die Länge des Hebelarms definierende Abstand der Schwenkachsen. Mit herkömmlichen Fertigungsverfahren ist eine solche Anordnung aufgrund der Hinterschneidungen und der für die Bearbeitung erforderlichen materialfreien Bereiche rund um die Gelenke zumindest wirtschaftlich, und wohl auch technisch nicht machbar. Im 3-D Druck hingegen können die Gelenke in der genannten Weise ausgebildet und positioniert sein, ohne dass komplizierte Bearbeitungsvorgänge dafür nötig wären.

Ein Koppelelement, welches zur Kraftübertragung zwischen zwei Hebeln oder einem Hebel und dem Lastaufnehmer dient, umfasst nach einer vorteilhaften Ausführungsform der Erfindung wenigstens ein, vorzugsweise zwei Kreuzfedergelenke der vorgenannten Art, die durch einen die Hebelkraft weiterleitenden Materialsteg zueinander beabstandet sind. Je nach Ausdehnung der jeweiligen Gelenke quer zu ihrer Schwenkachse können die Gelenke, mit Blick entlang ihrer parallelen Schwenkachsen, versetzt hintereinander oder seitlich nebeneinander/übereinander angeordnet sein. Auch an einem Koppelelement erlaubt der 3-D Druck die Anordnung eines oder zweier Kreuzfedergelenke (mit ihren zugehörigen Hinterschneidungen) in engem Abstand zueinander, wobei die Ausbildung eines Koppelelements mit wenigstens einem Kreuzfedergelenk auch unabhängig davon den Vorteil bringt, eine Schwenkachse anders als über eine Dünnstelle zu definieren und diese besondere Bauart gerade an einem Lastgelenk vorzusehen. (Diese erfindungsgemäße Ausbildung eines Koppelelements ist nicht notwendigerweise gekoppelt an einen erfindungsgemäßen Wägeblock und bietet auch unabhängig davon die genannten, vorzugsweise auch separat schutzfähigen Vorteile.)

Eine weitere vorteilhafte Ausführungsform der Erfindung sieht vor, dass die Schwenkachsen der an den Lenkern angeordneten Stützgelenke bzw. Lenkergelenke auf den Eckpunkten eines Parallelogrammes liegen. Die Lenker liegen dann in Form eines oberen und eines unteren Lenkers in Z-Richtung übereinander und erstrecken sich orthogonal dazu in Längsrichtung X zwischen dem Lastaufnehmer und dem Festland (andere räumliche Anordnungen sind ebenfalls denkbar). Diese Anordnung ermöglicht in vorteilhafter Weise, das Festland zwischen die Lenker zu erstrecken, um so weitere Stützstellen ausbilden zu können.

Eine weitere vorteilhafte Ausführungsform der Erfindung sieht vor, dass wenigstens ein mit einem Hebel verbundenes Lastgelenk oder Stützgelenk, in Richtung seiner Schwenkachse gesehen, auf einer, vorzugsweise auf beiden Seiten von einem Materialabschnitt dieses Hebel eingefasst ist. Der Hebel erstreckt sich dann auch seitlich des Gelenks (beispielsweise in Querrichtung Y gesehen) und kann dort eine für seine gewünschte Steifigkeit ausreichende Z-Abmessung aufweisen. Diese Anordnung eines Gelenks seitlich zu dem mit dem Gelenk verbundenen Hebel bietet konstruktive Vorteile. Die beiden durch das Gelenk miteinander zu verbindenden Elemente des Wägeblocks können in Richtung der Schwenkachse zumindest teilweise oder auch vollständig hintereinander angeordnet werden, sodass in diesem Bereich die Gesamtbauhöhe der beiden Elemente mit dem dazwischenliegenden Gelenk geringer ausfällt als die Summe der Bauhöhen der einzelnen Elemente und des Gelenks. Ein beispielsweise um eine Y-Achse zu schwenkender Hebel kann über ein Stützgelenk am Festland abgestützt werden, welches sich in Y-Richtung im Wesentlichen vor bzw. hinter diesem Hebel befindet. Im Stand der Technik verläuft der Hebel stets in X- oder Z-Richtung beabstandet an der Schwenkachse vorbei, da für die erfindungsgemäße Ausbildung (vorzugsweise schmale) Hinterschneidungen erforderlich wären, die in zerspanender Fertigung quasi nicht herstellbar sind.

Eine weitere vorteilhafte Ausführungsform der Erfindung sieht vor, dass wenigstens zwei am selben Hebel angreifende Gelenke in Richtung ihrer zueinander beabstandeten Schwenkachsen so hintereinander liegen, dass sich die senkrecht zu ihren Schwenkachsen gebildeten Gelenk-Querschnitte in einer Projektion in Schwenkachsenrichtung überdecken. Der zuvor bereits für das Lastgelenk mit benachbartem Stützgelenk beschriebene Vorteil bei Verwendung eines Kreuzfedergelenks lässt sich bei erfindungsgemäßem 3-D Druck auch auf andere Gelenkformen übertragen, die quer zu ihrer Schwenkachse eine gewisse seitliche Ausdehnung aufweisen. Dadurch wird es möglich, den in einer Richtung (X, Y, Z) bestehenden Schwenkachsenabstand zweier mit demselben Hebel verbundenen Gelenke, deren Schwenkachsen nicht fluchten, kleiner zu wählen als die Ausdehnung wenigstens eines der Gelenke in dieser Richtung, sodass die gelenkige Anbindung von Hebeln auf engem Raum möglich ist. Betroffen sind hier typischerweise Kombinationen von Gelenken verschiedener Art, also etwa ein Stützgelenk mit einem Lastgelenk, oder ein Lastgelenk mit einem Lenkergelenk. Dann gilt in der Regel, dass die jeweiligen Schwenkachsen zueinander beabstandet sind, also nicht fluchten.

Der Umstand, dass sich die Schwenkachse eines Gelenks erfindungsgemäß auch durch das von diesem Gelenk geführte Element hindurch bewegen kann, erlaubt eine weitere vorteilhafte Ausführungsform, wonach wenigstens ein Hebel eine Tasche aufweist zur Aufnahme eines mit diesem Hebel verbundenen Gelenks. Die Tasche fasst das Gelenk somit wenigstens auf einer Seite ein und schützt es vor ungewollter Beaufschlagung oder Verschmutzung. Die Anordnung einer von einem Hebel gebildeten Tasche mit einem darin liegenden, den Hebel schwenkbar verbindenden Gelenk in monolithischer Ausführung ist mit herkömmlichen Zerspanungsverfahren kaum herstellbar.

Neben der platzsparenden Anordnung des Gelenks relativ zum Hebel (wieder kann die Schwenkachse durch den Hebel hindurch führen) können die Elemente der Tasche mehrere Funktionen übernehmen. Die Tasche umfasst dabei wenigstens einen Wandabschnitt, von dem auf einer Seite ein erster Stützabschnitt abragt zur Verbindung mit dem Gelenk, beispielsweise indem dort zwei gekreuzte Stege eines Kreuzfedergelenks angreifen. Auf der anderen Seite des Wandabschnitts kann ein weiterer Stützabschnitt abragen, um Elemente eines weiteren Gelenks anzubinden. Denkbar ist beispielsweise der Fall, dass, in Querrichtung Y gesehen, auf einer Seite einer Taschenwand eines Hebels ein Stützgelenk ausgebildet ist, welches den Hebel am Festland abstützt. Die Taschenwand erstreckt sich dann etwa entlang einer X-Z-Ebene. Das Stützgelenk greift hebelseitig (beispielsweise von unten) an dem Stützabschnitt an, der von einem oberen Bereich der Taschenwand in Querrichtung Y seitlich abragt. Das Gelenk erstreckt sich dabei im Wesentlichen seitlich neben bzw. entlang der Taschenwand und seine Schwenkachse verläuft in Querrichtung Y.

Auf der anderen Seite der Taschenwand, dem ersten Stützabschnitt diametral gegenüberliegend, ragt von einem unteren Bereich der Wand ein weiterer Stützabschnitt in Querrichtung Y (entgegengesetzt zum Stützabschnitt auf der anderen Seite) ab, der den unteren Angriffspunkt eines Koppelelements bilden soll. Das Koppelelement weist dazu ein mit dem weiteren Stützabschnitt zu verbindendes Lastgelenk aus, welches sich, ausgehend von diesem Stützabschnitt, entlang der diesseitigen Taschenwand aufwärts erstreckt und dessen Schwenkachse wiederum in Querrichtung Y verläuft. Auf beiden Seiten der Taschenwand ist dann jeweils ein Gelenk angeordnet, welches jeweils an einem zu verschiedenen Seiten der Taschenwand abragenden Stützabschnitts angreift. Die beiden Stützabschnitte bilden mit der Taschenwand so einen etwa "Z"-förmigen Querschnitt mit orthogonal zueinander verlaufenden Abschnitten.

Die Schwenkachsen der beiden Gelenke können auf diese Weise sehr nah beieinander liegen, um eine sehr große Hebelübersetzung zu erzeugen und gleichzeitig kann der Hebel, beispielsweise durch die Höhe der Taschenwand, eine hohe Biegesteifigkeit gegen Biegemomente um die Y-Achse ausbilden. Die beiden Gelenke liegen, in Y-Richtung gesehen, vor und hinter der Taschenwand, vorzugsweise unter geringem Y-Abstand zur Taschenwand, und die jeweilige seitliche Ausdehnung jedes Gelenks quer zu seiner Schwenkachse kann die Ausbildung des jeweils anderen Gelenks, anders als mit den bekannten zerspanenden Verfahren im Stand der Technik, nicht einschränken.

Nach einer weiteren vorteilhaften Ausführungsform der Erfindung ist wenigstens ein weiterer Hebel vorgesehen, der im Wesentlichen den gleichen Zweck hat wie der erste Hebel, um durch Hintereinanderschaltung beider Hebel ein noch höheres Übersetzungsverhältnis für die über den Lastaufnehmer eingeleitete Gewichtskraft zu erzielen, als dies mit nur einem Hebel möglich ist. Auch mehr als zwei Hebel können zu diesem Zweck hintereinander geschaltet werden, wobei ein mittig abgestützter Hebel die Kraft auch in unverändertem Betrag weiterleiten kann.

Der weitere Hebel erstreckt sich zwischen einem ersten Endbereich und einem zweiten Endbereich, wobei die Erstreckungsrichtung der Längsrichtung X bzw. der Erstreckungsrichtung des ersten Hebels entsprechen kann. Die erfindungsgemäße Ausbildung des Monoblocks im 3-D-Druck erlaubt es jedoch, die Erstreckungsrichtungen mehrerer miteinander gekoppelter Hebel unterschiedlich zu wählen. So könnte ein erster Hebel sich in Längsrichtung X erstrecken, während ein damit gekoppelter weiterer Hebel sich dazu schräg oder orthogonal erstreckt, beispielsweise in Querrichtung Y oder Höhenrichtung Z. Die die Hebel miteinander verbindenden Koppelelemente weisen dann zwei Gelenke auf, deren Schwenkachse nicht mehr parallel verlaufen. Mehrere hintereinander geschaltete Hebel können sich daher ebenso wie die Schwenkachse der mit ihnen verbundenen Gelenke beliebig im Raum erstrecken, so dass die Schwenkachsen zweier Gelenke, insbesondere zweier Stützgelenke, nicht mehr parallel zueinander verlaufen, sondern (gedanklich bis zum Schnitt verschoben) einen Winkel (β :# 0) einschließen (bei den bisher bekannten Herstellungsverfahren für monolithische Wägeblöcke war es dagegen aus Bearbeitungsgründen üblich, die Schwenkachse aller Hebel parallel zueinander auszubilden, da quer zueinander verlaufende Schwenkachsen, insbesondere bei mehreren gekoppelten Hebeln, technisch bzw. wirtschaftlich nicht herstellbar sind). Dies ermöglicht die Erzielung hoher Übersetzungsverhältnisse entlang unterschiedlicher Raumrichtungen, so dass je nach Anforderung die Ausdehnung des Wägeblocks in X-, Y- oder Z-Richtung bestmöglich reduziert werden kann.

Der weitere Hebel ist an seinem ersten Endbereich über ein ein Lastgelenk aufweisendes Koppelelement mit dem zweiten Endbereich des ersten Hebels und außerdem über ein Stützgelenk mit dem Festland verbunden. An seinem zweiten Endbereich kann der weitere Hebel entweder mit einem wiederum weiteren Hebel gekoppelt sein oder eine Komponente des Kraftkompensationssystems tragen, er gilt dann als "letzter" Hebel.

Erstreckt sich der zweite Hebel im Wesentlichen in die gleiche Richtung wie der mit ihm gekoppelte erste Hebel, so bietet der 3-D Druck vorteilhafte Möglichkeiten, die Hebel platzsparend anzuordnen bzw. auszubilden. Beispielsweise könnte einer der beiden Hebel eine Ausnehmung aufweisen, in welche ein Abschnitt des jeweiligen anderen Hebels hinein- oder hindurchragt. Die Hebel können einander dabei teilweise oder vollständig durchdringen, und so eine platzsparende Konstruktion ermöglichen. Beispielsweise könnte der erste Hebel eine sich in Längsrichtung X erstreckende und in Höhenrichtung Z nach oben und/oder nach unten offene Ausnehmung aufweisen, die der Hebel in Querrichtung Y zu beiden Seiten einfasst. Ein Abschnitt des zweiten Hebels oder eine andere Komponente des Wägeblocks kann sich durch diese Ausnehmung hindurch erstrecken. Auf diese Weise können beide Hebel ein großes Flächenträgheitsmoment und damit eine große Steifigkeit in Bezug auf eine Biegung um die Y-Richtung ausbilden, wozu eine gewisse Ausdehnung in Höhenrichtung Z erforderlich ist. Gleichzeitig können die Hebel dabei in Querrichtung Y teilweise hintereinander oder ineinander liegen. Herkömmliche Monoblöcke mit solchen Hebeln sind nur schwer oder gar nicht herstellbar, da die Trennung der Hebel in Querrichtung Y nur durch ein in Höhenrichtung Z zugeführtes Werkzeug möglich ist. Liegen die Hebel jedoch in Höhenrichtung Z zwischen den Parallellenkern, oder behindern einzelne Abschnitte des einen Hebels die Werkzeugzuführung zum anderen Hebel, so ist diese Bearbeitung in der Regel nur durch zusätzlich erforderliche Ausnehmungen in den Lenkern bzw. Hebeln möglich, wodurch deren Steifigkeit geschwächt wird.

Eine besondere Ausführungsform der Erfindung sieht vor, dass der Monoblock wenigstens zwei Hebel umfasst, die einander so durchdringen, dass sie einen Volumenabschnitt des Monoblocks gemeinsam durchlaufen. Der besondere Vorteil des 3-D Drucks in Verbindung mit monolithischen Wägeblock an liegt hier darin, dass die Hebel eines Monoblocks, insbesondere in Verbindung mit der elektromagnetischen Kraftkompensation, nur eine virtuelle Bewegung ausführen, da jede Hebelauslenkung durch das Kraftkompensationssystem sofort wieder korrigiert wird, die Hebel sich faktisch also nicht relativ zueinander bewegen, jedoch die Bewegungsfreiheit dazu haben. Da die Hebel keine wirkliche Schwenkbewegung ausführen und entsprechend keinen Raum dafür benötigen, können sie ineinander liegend ausgebildet sein derart, dass ein erster Hebel zum Großteil oder vollständig von einem zweiten Hebel eng benachbart bzw. umschlossen ist. Denkbar wäre beispielsweise ein erster Hebel, der als Stabwerk um einen in Erstreckungsrichtung des Hebels verlaufenden, länglichen Innenraum herum ausgebildet ist. Der zweite Hebel ist teilweise oder vollständig in dem Innenraum des ersten Hebels angeordnet.

Dabei können einzelne Abschnitte oder Stäbe des ersten Hebels auch durch den Innenraum hindurch führen, um diesen Hebel stabil auszubilden. Es muss lediglich sichergestellt werden, dass der zweite Hebel mit seinen Abschnitten bzw. Stäben nicht mit dem ersten Hebel kollidiert. Da die Hebel keine wirkliche Schwenkbewegung ausführen, können die einzelnen Abschnitte der beiden Hebel sehr eng aneinander liegend ausgebildet werden, beispielsweise mit Abständen unterhalb von 1000 oder 500 µm. Die einzelnen Abschnitte bzw. Stäbe jedes Hebels können sich dabei in allen Raumrichtungen oder schräg dazu oder auch in gebogener Form erstrecken, um die nötige Hebelsteifigkeit zu erreichen. Zugleich können sich die Hebel untrennbar durchdringen, indem aneinander hängende Abschnitte des einen Hebels, die eine geschlossene Materialkette bilden, durch eine entsprechende Materialkette des anderen Hebels führen.

Anstelle einer Ausbildung als Stabwerk können die Komponenten des Wägeblocks auch eine Fachwerkstruktur zeigen mit möglichst dünnen Wänden, gebildet aus regelmäßigen Vielecken, beispielsweise Prismen, die die Komponente entlang einer oder mehreren Richtungen durchdringen. Materialfreie Bereiche können die Gestalt regelmäßiger geometrischer Körper haben (Quader, Pyramiden, Kugeln, Prismen etc.).

Zweckmäßigerweise bilden wenigstens zwei Komponenten des Wägeblocks in einem Schnitt quer zu einer Richtung X, Y, Z, insbesondere zur Längsrichtung X, jeweils einen Querschnitt mit einer aus mehreren getrennten Teilflächen bestehenden Querschnittsfläche aus, wobei sich die Hüllkurven der beiden Querschnitte wenigstens teilweise überdecken, und wobei jeweils mindestens eine Teilfläche des einen Querschnitts innerhalb der Hüllkurve des anderen Querschnitts liegt. Als Komponenten kommen hier insbesondere infrage: Festland, Lastaufnehmer, Hebel, Koppelelement, Lenker oder Gelenk. Mit "Hüllkurve" ist hier diejenige seitliche Begrenzung eines Querschnitts gemeint, welche die jeweils am weitesten außen liegenden Punkte des Querschnitts miteinander verbindet nach Art eines um den Querschnitt herumgelegten Gummibandes. Daraus wird deutlich, dass sich Materialabschnitte einer Komponente durch Materialabschnitte der anderen Komponente hindurch erstrecken können und zugleich von dieser seitlich umlaufen werden. Die raumsparende Anordnung der Komponenten ineinander ist so besonders gut möglich.

Die gegenseitige Durchdringung muss nicht so erfolgen, dass ein Hebel vollständig innerhalb des anderen Hebels angeordnet ist. Auch eine teilweise Durchdringung ist möglich in der Art, dass das von einem Hebel umschriebene Volumen teilweise in das von dem anderen Hebel umschriebene Volumen hineinragt. Dies reduziert das zur Ausbildung des Wägeblocks nötige Volumen und insbesondere dessen Gewicht.

Nach einer weiteren vorteilhaften Ausführungsform der Erfindung ist vorgesehen, dass sich das Festland in Längsrichtung X, ausgehend von einem ersten Blockende, zwischen die Parallellenker und/oder durch den Lastaufnehmer hindurch erstreckt. Insbesondere die Erstreckung durch den Lastaufnehmer hindurch bietet den Vorteil, auch jenseits des Lastaufnehmers Komponenten des Kraftkompensationssystems abstützen zu können, etwa einen Permanentmagneten oder Elemente eines Positionsdetektors. Das bis in den Bereich des Lastaufnehmers vorgezogene Festland ermöglicht es auch, Stützstellen für Hebel innerhalb des von dem Lastaufnehmer umschriebenen Raumes auszubilden. Dadurch können die Hebel vom Lastaufnehmer bis zum ersten Blockende möglichst lang ausgeführt werden und sind dabei nicht beschränkt auf den zwischen diesen beiden Komponenten zur Verfügung stehenden Raum. Denkbar ist beispielsweise, teilweise oder vollständig innerhalb einer Ausnehmung im Lastaufnehmer ein Stützgelenk auszubilden für einen ersten Hebel, in den vom Lastaufnehmer eine Kraft eingeleitet werden soll. Auch das Festland kann eine vergleichbare Ausnehmung aufweisen, so dass sich Endbereiche von Hebeln bis in das Festland hinein erstrecken können, um auch hier eine möglichst große Hebellänge erreichen zu können. "Ausnehmung" soll in diesem Fall verstanden werden als ein entlang einer Richtung X, Y oder Z verlaufender materialfreier Bereich, der in einer Projektion entlang dieser Richtung allseitig von dem Material der jeweiligen Komponente umgeben ist. (Diese erfindungsgemäße Führung des Festlandes durch den Lastaufnehmer hindurch ist nicht notwendigerweise gekoppelt an einen erfindungsgemäßen Wägeblock und bietet auch unabhängig davon die genannten, vorzugsweise auch separat schutzfähigen Vorteile.)

Denkbar ist ferner, den Lastaufnehmer in einem Bereich zwischen dem oberen und unteren Parallellenker auszubilden, so dass diese den Lastaufnehmer in Höhenrichtung Z überdecken. Die Lenker können dann in maximaler Länge ausgebildet werden und der Lastaufnehmer liegt im Wesentlichen innerhalb der Eckpunkte des Parallelogrammes, welches von den Schwenkachsen der Lenkergelenke, in Querrichtung Y gesehen, gebildet wird. (Diese Ausbildung des Lastaufnehmers ist nicht notwendigerweise gekoppelt an einen erfindungsgemäßen Wägeblock und bietet auch unabhängig davon die genannten, vorzugsweise auch separat schutzfähigen Vorteile.)

Der erfindungsgemäße generative Aufbau des Wägeblocks erlaubt es auch, einen Hebel, beispielsweise in Querrichtung Y, beidseitig durch einen weiteren Hebel einzufassen, der seinerseits in derselben Richtung beidseitig vom Festland F eingefasst ist. Die Hebel liegen also seitlich eingefasst zwischen Abschnitten des Festlandes und sind bei reduzierter Bauhöhe des Wägeblocks zugleich besonders gut geschützt.

Das zuvor beschriebene Kreuzfedergelenk lässt sich durch den erfindungsgemäßen generativen Aufbau auch in einer bevorzugten Weiterbildung herstellen. Wenigstens drei Materialstege verbinden dabei gemeinsam einen ersten Abschnitt mit einem zweiten Abschnitt gelenkig, wobei wenigstens einer der Materialstege in einer Projektion entlang der Schwenkachse einen Winkel (α) mit wenigsten zwei anderen Materialstegen bildet. Hier sind demnach mindestens drei Materialstege ausgebildet, wobei bevorzugt der mittlere Steg um den Winkel (α) gegenüber den beiden anderen, gleich gerichteten Stegen geneigt ist. Vorzugsweise gehorcht der Winkel wieder der Bedingung 45° < α < 135°, höchst vorzugsweise beträgt er 90°. Für die Ausbildung eines solchen Gelenks sind mehrere in Schwenkachsenrichtung hintereinanderliegende materialfreie Bereiche bzw. Hinterschneidungen erforderlich, die durch spanende Verfahren kaum herstellbar sind, insbesondere, wenn weitere Gelenke der gleichen Art in engem Abstand dazu vorgesehen sein sollen. Die besondere Stabilität eines mit drei oder mehr Stegen gebildeten Kreuzfedergelenks lässt sich jedoch durch den generativen Aufbau des Gelenks erreichen. (Diese erfindungsgemäße Ausbildung eines Kreuzfedergelenks ist nicht notwendigerweise gekoppelt an einen erfindungsgemäßen Wägeblock und bietet auch unabhängig davon die genannten, vorzugsweise auch separat schutzfähigen Vorteile.)

Vorzugsweise ist wenigstens ein Abschnitt eines Hebels oder Lenkers oder eines Gelenks oder des Festlands oder des Lastaufnehmers oder eines Koppelelements als Stabwerk ausgebildet. Bevorzugt ist die ganze Komponente als Stabwerk ausgebildet, wobei höchst vorzugsweise der gesamte Wägeblock eine solche Struktur hat. Das Gewicht des Wägeblocks kann dadurch auf ein Minimum reduziert werden, während die Stabwerkkonstruktion zugleich die erforderliche Steifigkeit der Komponenten sicherstellt. Die vorstehend für zwei Hebel beschriebene gegenseitige Durchdringung kann auch für beliebige andere, funktionell gleichartige oder verschiedene Komponenten des Wägeblocks realisiert werden. Der Begriff "Stabwerk" soll hier stellvertretend verwendet werden für Konstruktionen, die aus mehreren einzelnen Materialabschnitten zusammengesetzt sind, wobei in den einzelnen Materialabschnitten hauptsächlich Längskräfte, aber keine oder nur geringe Biegemomente, auftreten.

Der erfindungsgemäße 3-D Druck des Wägeblock ermöglicht die Ausbildung der einzelnen Komponenten mit wenig Material bei hoher Steifigkeit und in raumsparender Anordnung relativ zueinander. Eine erfindungsgemäße Ausführungsform ist daher dadurch gekennzeichnet, dass die Querschnittsfläche von wenigstens 50%, vorzugsweise mehr als 80% aller senkreckt zu seiner Haupterstreckungsrichtung durch einen Hebel gelegten Querschnitte kleiner ist als die von der Hüllkurve des jeweiligen Querschnitts umlaufene Fläche. Der Bezug zwischen dem aufsummierten Flächeninhalt der einzelnen, die Querschnittsfläche ergebenden Teilflächen zu dem von der Hüllkurve umschlossenen Flächeninhalt macht deutlich, dass der erfindungsgemäße 3-D Druck gerade für die komplexen Strukturen eines monolithischen Wägeblocks erhebliche Materialeinsparungen möglich macht und zugleich die geschickte Anordnung der einzelnen Komponenten in den durch die Materialeinsparung freigewordenen Bereichen erlaubt.

Die generative Erstellung des Wägeblocks ist nicht auf den Block als Ganzes beschränkt. Die überraschend auch für die Komponenten eines Wägeblocks aufgefundenen Vorteile des 3-D Drucks gelten somit auch für jede der Komponenten an sich. Gegenstand der Erfindung ist daher auch eine auf diese Weise hergestellte Komponente eines Wägeblocks sowie die Herstellung der Komponente als solche im 3-D Druck.

Das erfindungsgemäße Verfahren zur Herstellung der Komponenten des Wägeblocks bzw. des Wägeblocks als Ganzem beruht darauf, die einzelnen Komponenten durch das wiederholte Aufbringen dünner Materialschichten aufeinander (3-D Druck) auszubilden. Vorzugsweise wird der Block dabei, ausgehend von einem ersten Ende wie beispielsweise dem ersten Blockende, nach und nach in dünnen Schichten aufgebaut, etwa in Längsrichtung X. Materialfreie Bereiche innerhalb der Schichten bilden dabei Zwischenräume bzw. Hinterschneidungen aus, welche die einzelnen Komponenten voneinander trennen. Vorzugsweise erfolgt die Herstellung einer Komponente "gleichzeitig" mit der Herstellung anderer Komponenten, wobei unter "gleichzeitig" zu verstehen ist, dass zunächst alle Materialbereiche einer bestimmten Schicht bzw. auf einer bestimmten Schichthöhe gebildet werden, bevor die nächst höhere Schicht angelegt wird. Der Materialaufbau einer Komponente wird somit unterbrochen durch den Materialaufbau wenigstens einer weiteren Komponente, wenn beide Komponenten in der gleichen Schichthöhe Materialaufbau erfordern. Theoretisch ist es jedoch auch möglich, zunächst eine Komponente teilweise oder vollständig auszubilden, um anschließend eine weitere Komponente zu erstellen.

Als Material für den Wägeblock kann jedes Material verwendet werden, welches einerseits die Anforderungen an hochpräzisen 3-D Druck und zum anderen die Anforderungen an das bei monolithischen Wägeblöcken übliche Materialverhalten erfüllt. Die monolithische Ausbildung des Wägeblocks schließt dabei nicht aus, dass für unterschiedliche Bereiche oder Komponenten des Wägeblocks unterschiedliche Materialien verwendet werden, die trotzdem monolithisch miteinander verbunden sein können. So könnte für das hinsichtlich der Steifigkeit besonders beanspruchte Festland ein anderes Material gewählt werden als für den Lastaufnehmer, dessen Biegesteifigkeit eventuell von untergeordneter Bedeutung ist. Denkbar ist es ferner, auch elektrisch leitendes Material zu verwenden, etwa um eine am letzten Hebel angeordnete Spule oder Anschlüsse an Positionsdetektoren oder sonstige Sensoren zu drucken.

In einer vorteilhaften Ausführungsform ist der Wägeblock teilweise oder vollständig aus Metall, vorzugsweise Aluminium oder einer Aluminiumlegierung, gebildet.

Obwohl der erfindungsgemäße Wägeblock als 3-D Druck hergestellt wird, ist die eventuell erforderliche Nachbearbeitung mit spanabhebenden Werkzeugen nicht ausgeschlossen.

Eine Ausführungsform eines erfindungsgemäßen Wägeblocks soll nachfolgend anhand eines Figurenbeispiels näher erläutert werden. Dabei zeigt
- Figur 1: das Festland eines erfindungsgemäßen Wägeblocks
- Figur 2: die Ausführung gemäß Figur 1 mit Parallellenkern
- Figur 3: die Parallellenker gemäß Figur 2 mit daran angreifendem Lastaufnehmer
- Figur 4: einen Teil des Lastaufnehmers gemäß Figur 3 mit daran angreifendem ersten Hebel
- Figur 5: den ersten Hebel gemäß Figur 4 mit darunterliegendem zweiten Hebel
- Figur 6: die beiden Hebel gemäß Figur 5, verbunden durch ein Koppelelement
- Figur 7: einen Teil des Festlandes mit hineinragenden Hebeln
- Figur 8: das Festland mit Teilen des Lastaufnehmers und dazwischenliegenden Hebeln
- Figur 9: eine Seitenansicht eines erfindungsgemäßen Wägeblocks,
- Figur 10: eine schematische Schnittdarstellung zweier einander durchdringender Hebel
- Figur 11: eine beispielhafte Stabwerkkonstruktion eines Lenkers, und
- Figur 12: zwei Konstruktionsbeispiele für Abschnitte von Wägeblockkomponenten

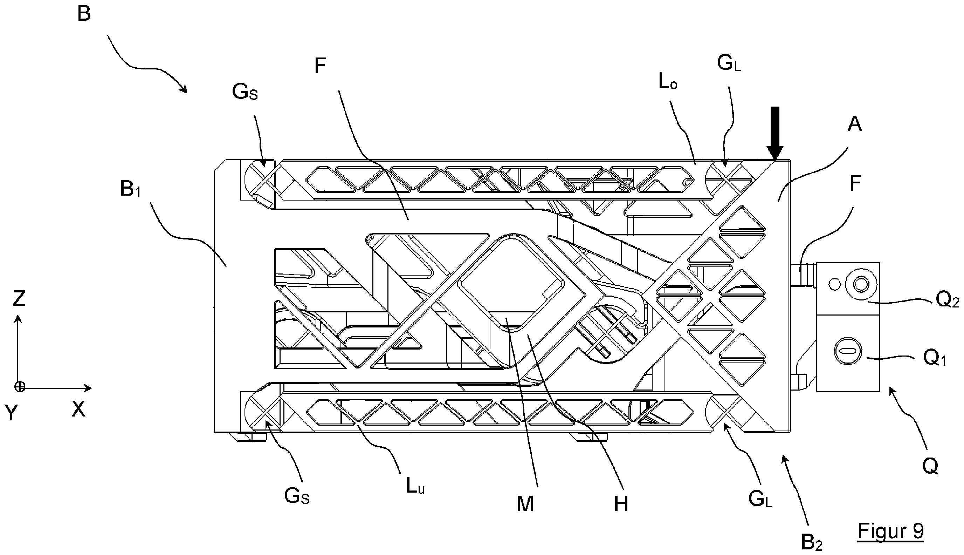

Figur 9 zeigt in schematischer Seitenansicht einen vollständigen erfindungsgemäßen Wägeblock B. Der Wägeblock B erstreckt sich in einer Längsrichtung X, einer dazu orthogonalen, in die Zeichenebene hinein gerichteten Querrichtung Y und zu beiden Richtungen wiederum orthogonalen Höhenrichtung Z. Ein erstes (in Figur 9 linkes) Blockende B₁ ist über die gesamte Z-Höhe als Festland F ausgebildet. Das Festland F erstreckt sich in reduzierter Höhe, ausgehend vom ersten Blockende B₁, in Längsrichtung X nach rechts in Richtung auf das zweite Blockende B₂. An einem oberen und einem unteren Abschnitt des ersten Blockendes B₁ greift ein oberer und ein unterer Parallellenker Lₒ, Lᵤ jeweils über zwei in Querrichtung Y hintereinander liegende Stützgelenke Gs am Festland F an, wobei die von den Lenkergelenken gebildeten Schwenkachsen in Querrichtung Y verlaufen (und nicht näher bezeichnet sind).

Die Parallellenker Lₒ, Lᵤ erstrecken sich in Längsrichtung X bis zu einem Lastaufnehmer A, der zur Aufnahme einer durch einen Pfeil angedeuteten Gewichtskraft vorgesehen ist. Die Parallellenker Lₒ, Lᵤ greifen jeweils über zwei in Querrichtung Y hintereinander liegende Lenkergelenke G_{R} am Lastaufnehmer an. Die von den Lenkergelenken und den Stützgelenken gebildeten Schwenkachsen liegen auf den Ecken eines Parallelogrammes, sodass der Lastaufnehmer A durch die Parallellenker Lₒ, Lᵤ relativ zum Festland in Höhenrichtung Z parallel geführt wird.

In Höhenrichtung Z zwischen dem oberen und dem unteren Parallellenker erstreckt sich nicht nur der hervorkragende Abschnitt des Festlandes F, sondern auch ein erster Lenker M und ein damit gekoppelter zweiter Lenker H. Der zweite Lenker H ragt in Längsrichtung X durch den Lastaufnehmer A hindurch und wirkt an seinem freien Ende mit einem ersten Teil Q₁ eines optischen Sensors Q zusammen, der die Auslenkung des Hebels relativ zu einem zweiten Teil Q₂ des optischen Sensors erfasst. Auch das Festland F ragt in Längsrichtung X durch eine Ausnehmung im Lastaufnehmer A hindurch und trägt den zweiten Teil Q₂ des optischen Sensors Q.

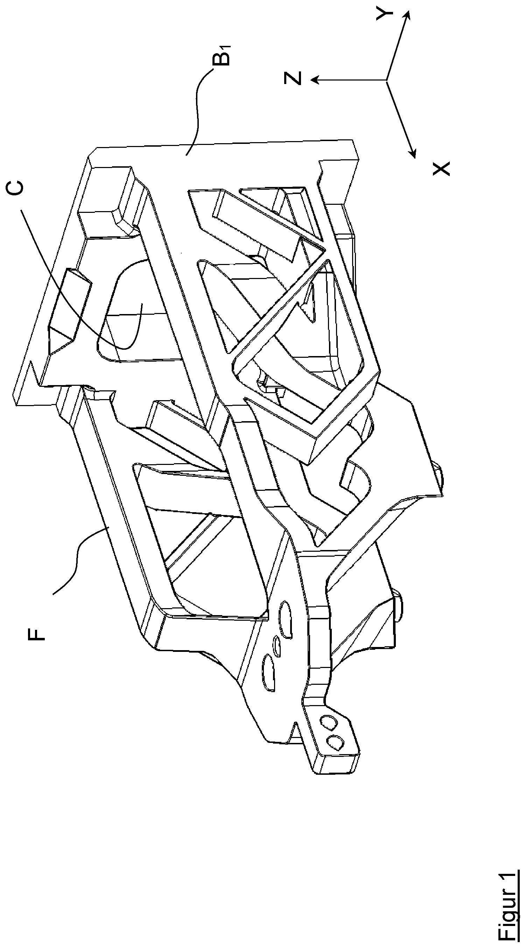

Figur 1 zeigt das freigestellte Festland F des Wägeblocks gemäß Figur 9 in schematischer Seitenansicht. Das Festland F ist teilweise mit stabwerkartiger Struktur ausgebildet. Im Festland F am ersten Blockende B₁ ist eine Ausnehmung C ausgebildet, die zur Aufnahme von Abschnitten der Lenker H und M vorgesehen ist. Das Festland F hat eine etwa quaderförmige Außenkontur, wobei der Innenraum weitgehend freigehalten ist.

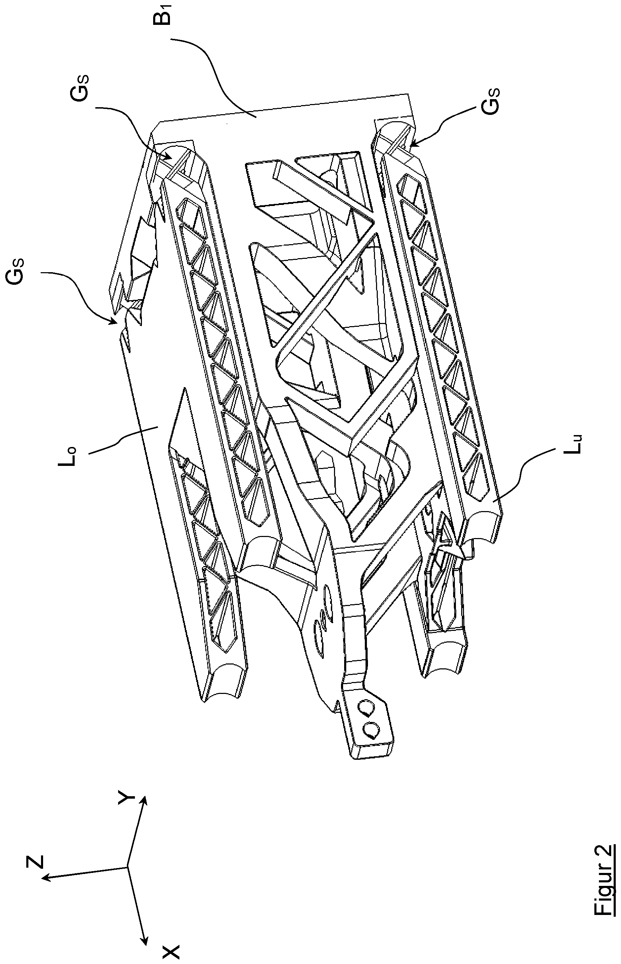

Figur 2 zeigt das Festland mit den daran angeordneten Parallellenkern Lₒ, Lᵤ. Die Lenker haben eine fachwerkartige Struktur, die sich aus einzelnen, in Querrichtung Y verlaufenden Prismen zusammensetzen. Die Oberseite des oberen Lenkers Lₒ und die Unterseite des unteren Lenkers Lᵤ ist weitgehend geschlossen ausgebildet, wobei beide Lenker in Längsrichtung X auf der vom ersten Blockende B₁ abgewandten Seite eine Ausnehmung aufweisen zur Aufnahme von Abschnitten des Lastaufnehmers A. Über Stützgelenke Gs sind die Lenker mit dem Festland F gelenkig verbunden. Die Stützgelenke sind dabei als Kreuzfedergelenke ausgebildet.

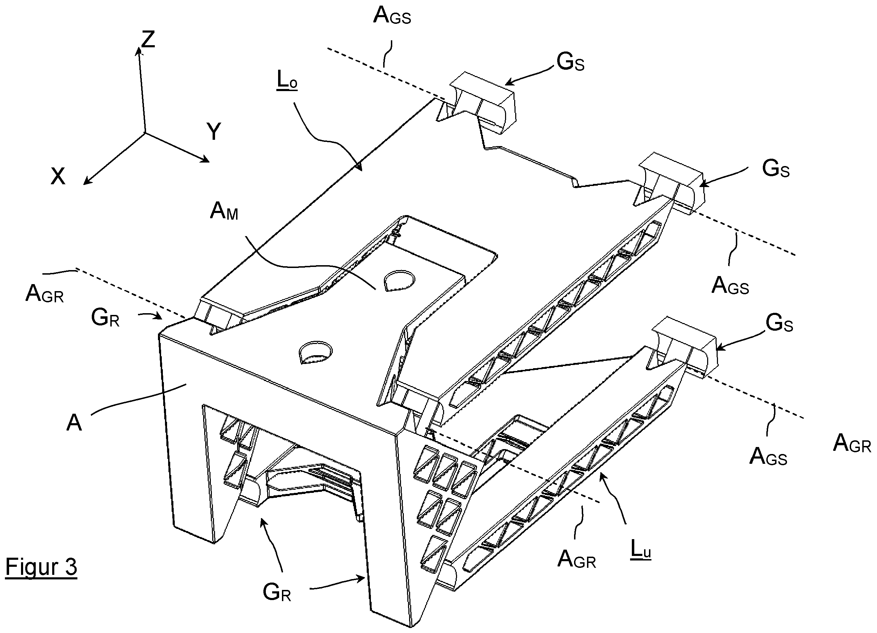

Figur 3 zeigt in schematischer Darstellung den Lastaufnehmer A. Dieser ist über Lenkergelenke G_{R} mit den Parallellenkern Lₒ, Lᵤ verbunden, wobei die Stützgelenke ebenso wie die Lenkergelenke Schwenkachsen A_{GS} bzw. A_{GR} ausbilden, die in der Ausführungsform gemäß Figur 3 alle parallel zueinander in Querrichtung Y verlaufen und nicht vollständig bezeichnet sind. Auch der Lastaufnehmer A zeigt Abschnitte mit einer fachwerkartigen Struktur zur Gewichtseinsparung. Ein mittlerer Abschnitt A_{M} des Lastaufnehmers A ragt in Längsrichtung X in die Ausnehmung des oberen Lenkers Lₒ.

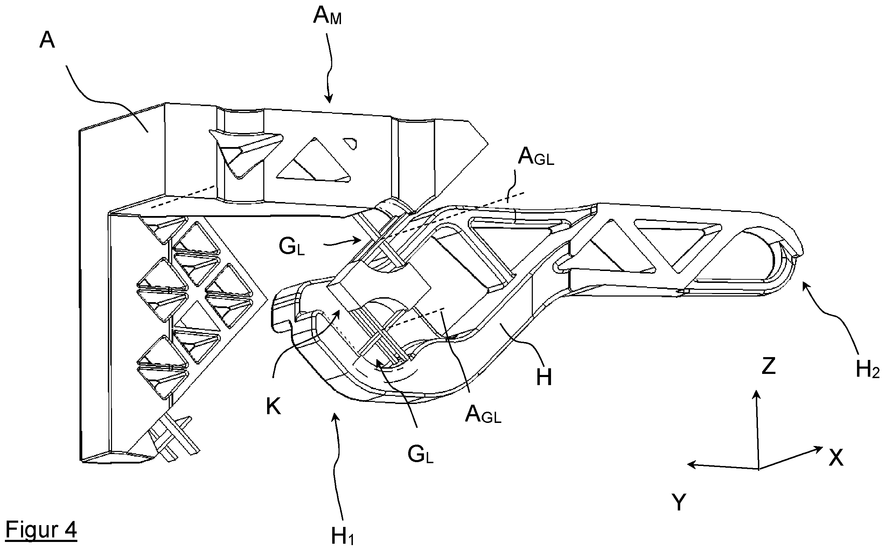

Figur 4 zeigt den teilweise aufgebrochenen Lastaufnehmer A von schräg unten. Im Bereich des Abschnittes A_{M} des Lastaufnehmers A greift an diesem ein Koppelelement Kan. Das Koppelelement weist zwei in Höhenrichtung Z übereinander angeordnete Lastgelenke G_{L} auf, die jeweils als Kreuzfedergelenke ausgebildet sind und jeweils eine in Querrichtung Y verlaufende Schwenkachse A_{GL} aufweisen. Das obere Lastgelenk ist mit dem Abschnitt A_{M} des Lastaufnehmers A verbunden und dient zur Aufnahme und Weiterleitung einer in den Lastaufnehmer A eingeleiteten Last. Zwischen den beiden Lastgelenken des Koppelelements K ist ein die beiden Gelenke miteinander verbindender Steg angeordnet. Das untere Lastgelenk sitzt in einer Tasche eines ersten Hebels H und greift an einem ersten Endbereich H, des Hebels H an diesem an. Der Hebel A erstreckt sich in Längsrichtung X bis zu einem zweiten Endbereich H₂, um dort mit einem zweiten Hebel M gekoppelt zu werden.

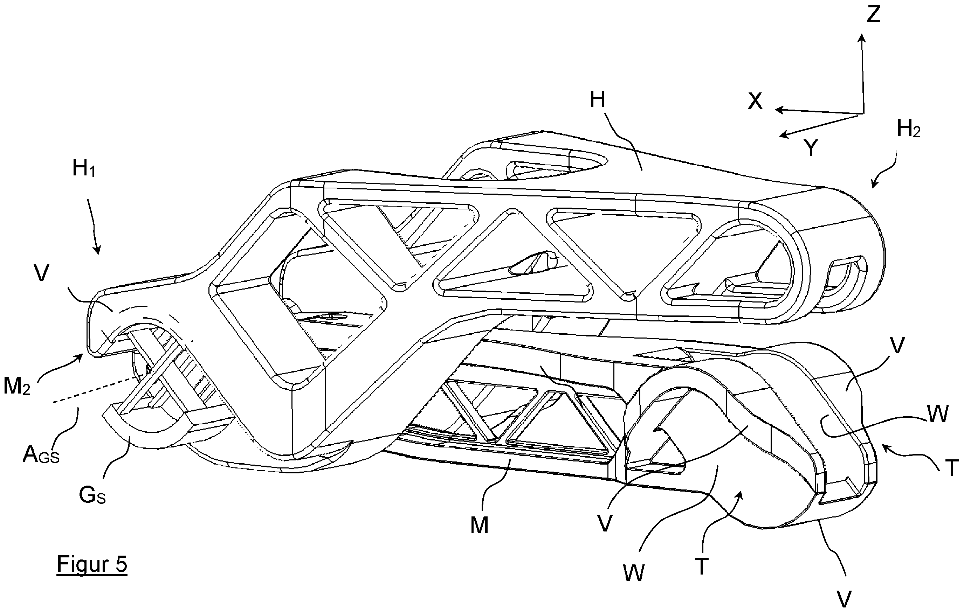

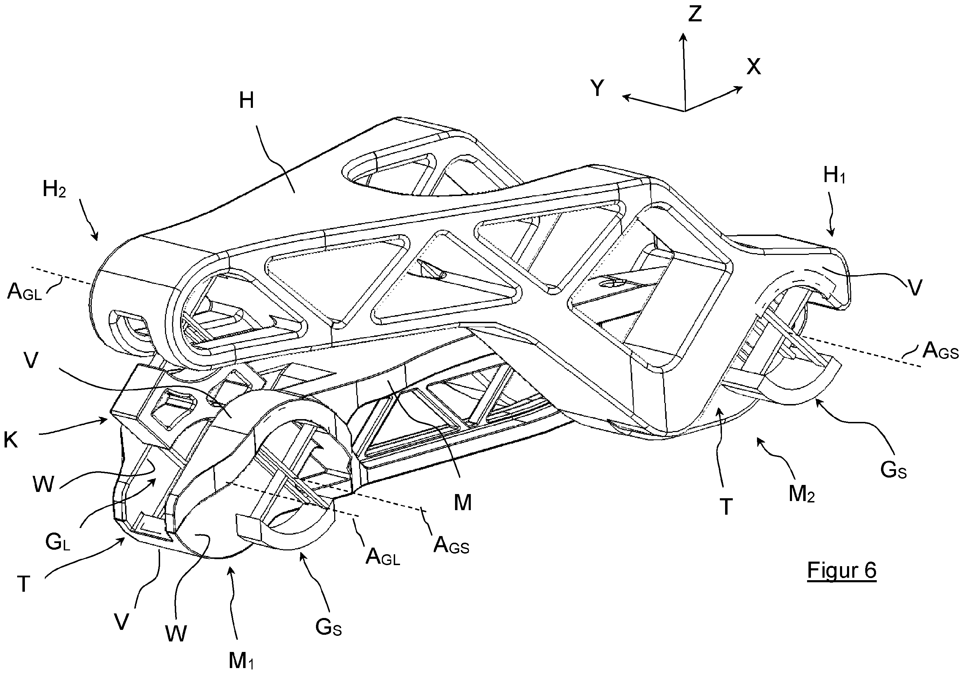

Figur 5 zeigt die Anordnung des ersten Hebels H mit einem sich durch diesen hindurch erstreckenden zweiten Hebel M. Auch der zweite Hebel M erstreckt sich in Längsrichtung X von einem ersten Endbereich M, bis zu einem zweiten Endbereich M₂ (s. Fig. 6). Der Hebel H ist an seinem ersten Endbereich H, zur Abstützung am nicht dargestellten Festland mit zwei in Querrichtung Y hintereinander liegenden Stützgelenken Gs versehen, die eine gemeinsame Schwenkachse A_{GS} ausbilden. Der Hebel H ist etwa symmetrisch zu einer mittigen X-Z-Ebene ausgebildet, und das hintere Stützgelenk Gs ist in Figur 5 durch Abschnitte der Hebelkonstruktion verdeckt. Die beiden Stützgelenke Gs sind als Kreuzfedergelenke ausgebildet (alle in den Figuren 1 bis 9 gezeigten Kreuzfedergelenke umfassen jeweils drei in Richtung der Schwenkachse hintereinander liegende Stege, die die beiden gelenkig zueinander zu führenden Abschnitte miteinander verbinden. Der mittlere Steg ist dabei um 90°, bezogen auf die Schwenkachse, gegenüber den anderen beiden Stegen geneigt).

Zur platzsparenden Anordnung der beiden Hebel ist der erste Hebel H von einem in Längsrichtung X verlaufenden Freiraum durchsetzt, der durch den zweiten Hebel M belegt ist. Beide Hebel sind zumindest teilweise als Fachwerkkonstruktion ausgebildet.

Figur 6 zeigt aus einer anderen Ansicht, wie der erste Hebel H an seinem zweiten Endbereich H₂ über ein Koppelelement K mit dem ersten Endbereich M₂ des zweiten Hebels M verbunden ist. Das Koppelelement K umfasst wieder zwei in Höhenrichtung Z übereinander angeordnete Lastgelenke (von denen nur das untere bezeichnet ist). Die beiden Lastgelenke A_{GL} bilden, analog zu der Ausführung des Koppelelements in Figur 4, jeweils eine in Querrichtung Y verlaufende Schwenkachse A_{GL}. Beide Lastgelenke sind über einen dazwischenliegenden Steg miteinander verbunden. Anders als das Koppelelement K in Figur 4 ist hier der Steg von Ausnehmungen durchsetzt, um Gewicht einzusparen.

Das untere Lastgelenk G_{L} ist in einer Tasche T des Lenkers M angeordnet. Die Tasche T weist in Querrichtung Y zwei zueinander parallele Wandabschnitte W auf, die das untere Lastgelenk G_{L} zwischen sich aufnehmen. An ihrem unteren Ende sind die beiden Wandabschnitte W durch einen gemeinsamen Stützabschnitt V miteinander verbunden. Das untere Lastgelenk G_{L} greift an diesem Stützabschnitt V an, um die vom ersten Hebel H durch das Koppelelement K geleitete Hebelkraft in den Hebel M einzuleiten. Auf der dem unteren Lastgelenk jeweils abgewandten äußeren Seite der beiden Wandabschnitte ist jeweils ein Stützgelenk Gs vorgesehen, welches den Hebel M am nicht dargestellten Festland abstützt (wobei Figur 6 nur das vordere der beiden Gelenke zeigt). Zur Abstützung des Hebels M über dieses Stützgelenk ragt auf der dem unteren Lastgelenk G_{L} abweisenden Außenseite jedes Wandabschnitts W ein oberer Stützabschnitt V in Querrichtung Y seitlich nach außen, der auf seiner Unterseite von den Stegen des als Kreuzfedergelenks ausgebildeten Stützgelenks Gs untergriffen wird. Jeder Wandabschnitt W der Tasche T weist somit auf in Querrichtung Y gegenüberliegenden Seiten zwei in Höhenrichtung Z zueinander versetzt angeordnete Stützabschnitte V auf, sodass ein Querschnitt senkrecht zur Längsrichtung X durch jeden Wandabschnitt eine etwa Z- förmige Kontur ergäbe (mit zueinander orthogonalen Abschnitten).

Die beiden Stützgelenke Gs am ersten Endbereich M, des Hebels M bestimmen die Schwenkachse, um die der Hebel relativ zum Festland schwenkbar ist. Der Abstand zwischen der gemeinsamen Schwenkachse A_{GS} der beiden in Querrichtung Y hintereinander liegenden Stützgelenke Gs zum Abstand der Schwenkachse A_{GL} des unteren Lastgelenks G_{L} bestimmt einen kurzen Hebelarm des Hebels M. Um hohe Übersetzungsverhältnisse zu erzielen sollte der Abstand möglichst gering gewählt werden. Obwohl die den genannten Achsabstand bestimmenden Gelenke G_{L}, Gs quer zu ihren Schwenkachsen eine gewisse Ausdehnung aufweisen (die insbesondere von den Stegen des Kreuzfedergelenks gebildet wird) lassen sich die Schwenkachsen aufgrund der in Querrichtung Y versetzt zueinander gewählten Anordnung der jeweiligen Gelenke sehr nah zueinander ausbilden.

Das obere Lastgelenk G_{L} des Koppelelements K, welches am zweiten Endbereich H₂ des Hebels H angreift, ragt dazu durch eine Ausnehmung so weit in den Hebel H hinein, dass die Schwenkachse A_{GL} des oberen Lastgelenks durch den oberen Hebel H hindurchläuft. Auch dadurch ergibt sich eine insbesondere in Höhenrichtungen H reduzierte Bauhöhe.

Wie erwähnt zeigt Figur 5 eines der am ersten Endbereich H, des Hebels H vorgesehenen Stützgelenke Gs. Figur 6 zeigt das diesem Gelenk in Querrichtung Y gegenüberliegenden zweite Stützgelenk Gs (in Figur 6 ganz rechts). Auch dort ist eine Tasche T vorgesehen, die sich mit einem Wandabschnitt zumindest auf einer Seite des Stützgelenks erstreckt. Ein Stützabschnitt V ragt in Querrichtung Y von diesem Wandabschnitt nach außen ab, um die nach oben ragenden Stege des Stützgelenks Gs aufnehmen zu können.

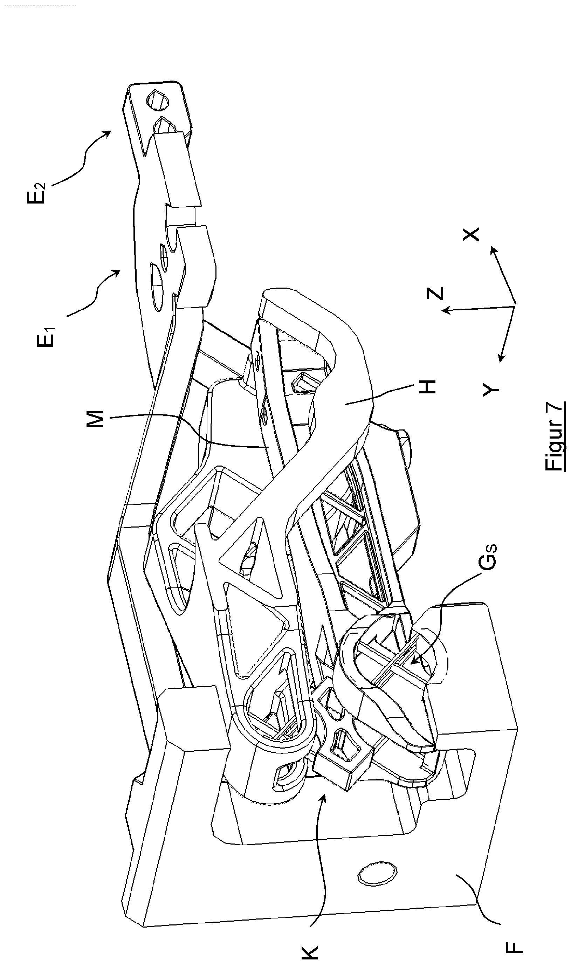

Figur 7 zeigt die Anordnung gemäß Figur 6, eingebettet in das Festland F. Zu sehen ist dabei, wie die beiden Hebel M, H im Bereich ihrer Kopplung mittels Koppelelement K in eine Ausnehmung des Festlandes F hineinragen, um maximale Hebellängen ausbilden zu können. Zu sehen ist ferner, wie sich das vordere Stützgelenk Gs des unteren Hebels M am Festland F abstützt. An seinem in X-Richtung hinteren Ende weist das Festland einen Befestigungsabschnitt E₁ auf, um daran eine Komponente des Kraftkompensationssystems anzuordnen, insbesondere einen Permanentmagneten D. In X-Richtung schließt sich noch ein weiterer Abschnitt E₂ an, der zur Aufnahme des Elements Q₂ des Positionsdetektors Q vorgesehen ist.

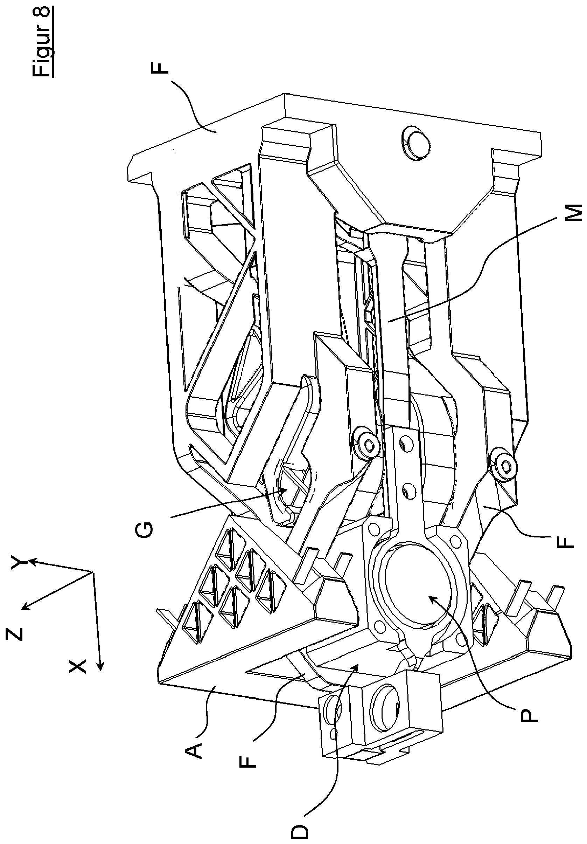

Figur 8 zeigt die Konstruktion gemäß Figur 9 in einer gekippten Ansicht, jedoch ohne den oberen und unteren Lenker Lₒ, Lᵤ. Zu erkennen ist eine von dem unteren Hebel M über eine daran angeschraubte Verlängerung getragene Spule P, die sich in Abhängigkeit der durch den Lastaufnehmer A aufgenommenen und mit den Hebeln übersetzten Gewichtskraft relativ zu einem vom Festland F getragenen Permanentmagneten D bewegt. Spule P und Permanentmagnet D bilden Elemente eines elektromagnetischen Kraftkompensationssystems, mit dem die Schwenkbewegung des Hebels M kompensiert wird, um aus dem dafür nötigen Spulenstrom auf die zu messende Gewichtskraft schließen zu können.

Die Spule P und der Permanentmagnet D sind in Längsrichtung X innerhalb einer im Lastaufnehmer A vorgesehenen Ausnehmung angeordnet, um auf möglichst kurzem Bauraum in Längsrichtung X maximale Hebellängen bzw. Übersetzungen ausbilden zu können.

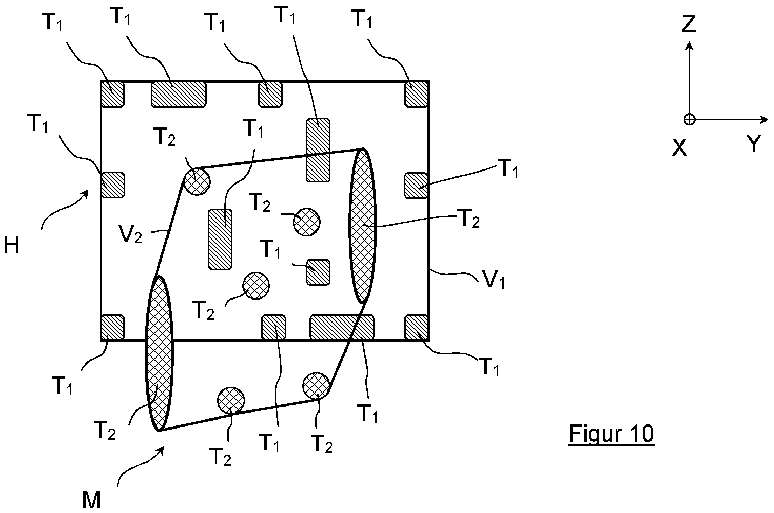

Die einzelnen Komponenten des erfindungsgemäßen Wägeblocks können einander vorteilhafterweise durchdringen, um dadurch Bauraum zu reduzieren. Die Durchdringung kann im einfachsten Falle erfolgen, indem eine erste Komponente eine Ausnehmung aufweist, in welche die andere Komponente hineinragt. Besonders bevorzugt können die Komponenten einander jedoch auch gegenseitig durchdringen, was anhand von Figur 10 erläutert sein soll. Dort sind zwei Komponenten 1, 2, die sich in Längsrichtung X erstrecken, in einem quer zur Längsrichtung X gebildeten Querschnitt zu sehen. Die Komponente 1 weist in diesem Schnitt einzelne Teilflächen T₁ auf, während sich der Querschnitt der Komponente 2 aus den jeweiligen Teilflächen T₂ zusammensetzt. Der Querschnitt der Komponente 1 wird von einer Hüllkurve V₁ umlaufen, und die Hüllkurve V₂ umläuft den Querschnitt der Komponente 2. Die gegenseitige Durchdringung der beiden Komponenten ist dadurch gekennzeichnet, dass sich jeweils Teilflächen der einen Komponente innerhalb der Hüllkurve der anderen Komponente befinden. Dadurch wird eine stabile und besonders raumsparende Anordnung der Komponenten möglich. Selbstverständlich können sich auch mehr als zwei verschiedene Komponenten auf diese Weise durchdringen.

Figur 10 verdeutlicht außerdem, dass die aus den einzelnen Teilflächen einer Komponente zusammengesetzte Querschnittsfläche deutlich kleiner ist als die von der jeweiligen Hüllkurve dieses Querschnitts umlaufende Fläche. Ein beispielsweise als Stabwerk ausgebildeter Hebel könnte den Querschnitt der Komponente 1 aufweisen, wobei die einzelnen Teilflächen T₁ den Schnitten durch die in ihren Abmessungen variierenden Stäbe entsprechen. Die Komponente 2 könnte ein mit dem Hebel gekoppelter weiterer Stabwerk-Hebel sein, wobei sich beide Hebel in der in Figur 10 beispielhaft gezeigten Weise durchdringen können. Figur 10 soll nur das Durchdringungsprinzip von ineinander angeordneten Komponenten verdeutlichen, deren Querschnitte und Teilflächen je nach Anforderung auch anders ausfallen können.

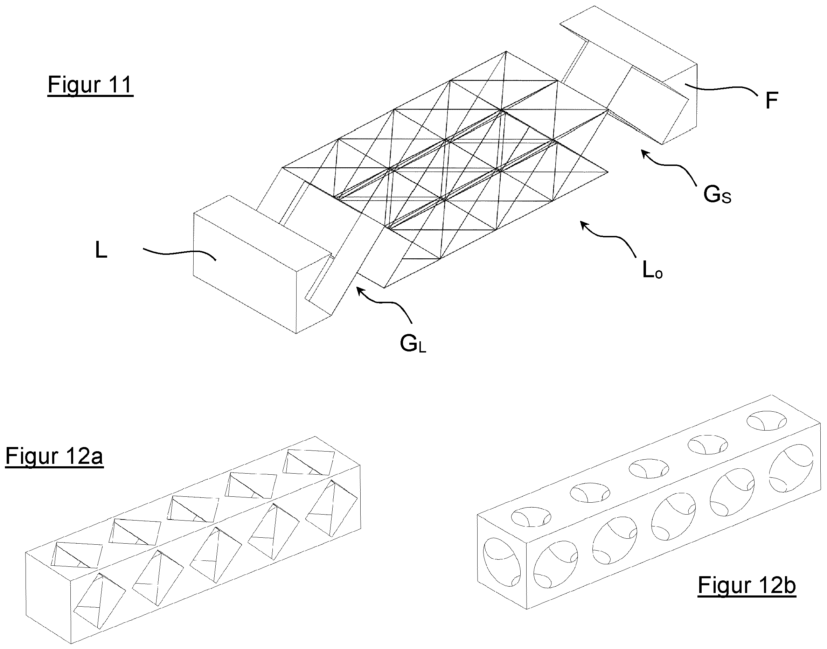

Figur 11 zeigt ein Beispiel für einen als Stabwerk ausgebildeten Lenker Lₒ, der über zwei Stützgelenke Gs am nicht gezeigten Festland und über zwei Lenkergelenke G_{R} am ebenfalls nicht dargestellten Lastaufnehmer gelenkig angebunden ist. Die Stabwerksstruktur bietet bei geringem Gewicht eine hohe Steifigkeit in allen Richtungen des Raumes. Zugleich bietet der materialfreie Raum zwischen den Stäben Platz für weitere Komponenten, die den Lenker durchdringen könnten. Zusätzlich oder alternativ können natürlich auch eine oder mehrere andere Komponenten des Wägeblocks nach diesem Vorbild stabwerkartig ausgebildet sein.

Fig. 12a zeigt ein Beispiel für eine fachwerkartige Struktur einer Komponente, die aus einzelnen Prismen aufgebaut bzw. von prismenförmigen Ausnehmungen durchsetzt ist. Eine alternative Bauform ist in Fig. 12b zu sehen, bei der ein quaderförmiger Block von kugelförmigen Ausnehmungen durchsetzt ist. Natürlich lassen sich solche und andere Bauformen (auch innerhalb einer Komponente) nach Bedarf beliebig kombinieren.

### Bezugszeichenliste

- α: Stegwinkel im Kreuzfedergelenk
- β: Winkel zwischen zwei bis zum Schnitt verschobenen Schwenkachsen
- 1, 2: Komponenten des Wägeblocks (allgemein)
- A: Lastaufnehmer
- A_{GL}: Schwenkachse eines Stützgelenks
- A_{GR}: Schwenkachse eines Lenkergelenks
- A_{GS}: Schwenkachse eines Stützgelenks
- B: Wägeblock
- B₁, B₂: erstes / zweites Blockende
- C: Ausnehmung
- D: Permanentmagnet
- E₁, E₂: Befestigungsabschnitte am Festland
- F: Festland
- GL: Lastgelenk
- GR: Lenkergelenk
- GS: Stützgelenk
- H: erster Hebel
- H₁, H₂: erster/zweiter Endbereich des Hebels H
- K: Koppelelement
- L: Lastaufnehmer
- Lₒ: Oberer Lenker
- Lᵤ: Unterer Lenker
- M: zweiter Hebel
- M₁, M₂: erster/zweiter Endbereich des Hebels M
- P: Spule
- Q: Positionsdetektor
- Q₁, Q₂: Elemente des Positionsdetektors
- T: Tasche
- T₁, T₂: Teilflächen
- V: Stützabschnitt
- V₁, V₂: Hüllkurven
- X / Y / Z: Längsrichtung / Querrichtung / Höhenrichtung

## Patentansprüche

1. Wägeblock (B), der sich in einer Längsrichtung (X), in einer zur Längsrichtung (X) orthogonalen Querrichtung (Y) und in einer zu den beiden Richtungen (X, Y) orthogonalen Höhenrichtung (Z) erstreckt, wobei der Wägeblock (B) umfasst
a) ein Festland (F) zur Abstützung von Lenkern oder Hebeln,
b) zwei Lenker (Lₒ, Lᵤ), wobei sich jeder der beiden Lenker in Längsrichtung (X) von einem ersten Endbereich zu einem dem ersten Ende gegenüberliegenden zweiten Endbereich erstreckt, wobei jeder Lenker (Lₒ, Lᵤ) über wenigstens ein Stützgelenk (Gs) mit dem Festland (F) verbunden ist,
c) einen Lastaufnehmer (A) zur Aufnahme einer entlang der Höhenrichtung (Z) eingeleiteten Gewichtskraft, wobei die beiden Lenker jeweils mit ihrem zweiten Ende über wenigstens ein Lenkergelenk (G_{R}) mit dem Lastaufnehmer (A) verbunden sind, so dass der Lastaufnehmer (A) relativ zum Festland in Höhenrichtung (Z) parallel geführt wird,
d) dass die einzelnen Komponenten des Wägeblocks (B) nach dem Prinzip der generativen Fertigung (3D-Druck) schichtweise aufgebaut und monolithisch zusammenhängend ausgebildet sind,
e) wobei der Wägeblock (B) Hinterschneidungen aufweist, die bei der generativen Fertigung gebildet werden durch Zonen, in denen keine Materialschicht aufgebaut wird,
**dadurch gekennzeichnet,**
f) **dass** ein erster Hebel (H) vorgesehen ist, der sich zwischen einem ersten Endbereich (H₁) und einem zweiten Endbereich (H₂) erstreckt, wobei der erste Hebel (H) an seinem ersten Endbereich (H₁) an ein wenigstens ein ein Lastgelenk (G_{L}) umfassendes Koppelelement (K) zur Weiterleitung einer Kraft anschließt, und wobei der erste Hebel (H) über ein Stützgelenk (Gs) mit dem Festland (F) verbunden ist, und wobei sowohl das Stützgelenk (Gs) als auch das Lastgelenk (G_{L}) jeweils eine Schwenkachse (A_{GS}, A_{GL}) ausbilden, und
g) **dass** das Lastgelenk (G_{L}), um zwei Abschnitte des Wägeblocks gelenkig miteinander zu verbinden, als Kreuzfedergelenk ausgebildet ist, bei dem wenigstens zwei Materialstege gemeinsam den ersten Abschnitt mit dem zweiten Abschnitt verbinden, und wobei einer der Materialstege in einer Projektion entlang der Schwenkachse einen Winkel (α) mit einem anderen Materialsteg bildet, mit 45° ≤ α ≤ 135°, bevorzugt α = 90°.

2. Wägeblock (B), der sich in einer Längsrichtung (X), in einer zur Längsrichtung (X) orthogonalen Querrichtung (Y) und in einer zu den beiden Richtungen (X, Y) orthogonalen Höhenrichtung (Z) erstreckt, wobei der Wägeblock (B) umfasst
a) ein Festland (F) zur Abstützung von Lenkern oder Hebeln,
b) zwei Lenker (Lₒ, Lᵤ), wobei sich jeder der beiden Lenker in Längsrichtung (X) von einem ersten Endbereich zu einem dem ersten Ende gegenüberliegenden zweiten Endbereich erstreckt, wobei jeder Lenker (Lₒ, Lᵤ) über wenigstens ein Stützgelenk (Gs) mit dem Festland (F) verbunden ist,
c) einen Lastaufnehmer (A) zur Aufnahme einer entlang der Höhenrichtung (Z) eingeleiteten Gewichtskraft, wobei die beiden Lenker jeweils mit ihrem zweiten Ende über wenigstens ein Lenkergelenk (G_{R}) mit dem Lastaufnehmer (A) verbunden sind, so dass der Lastaufnehmer (A) relativ zum Festland in Höhenrichtung (Z) parallel geführt wird,
d) dass die einzelnen Komponenten des Wägeblocks (B) nach dem Prinzip der generativen Fertigung (3D-Druck) schichtweise aufgebaut und monolithisch zusammenhängend ausgebildet sind,
e) wobei der Wägeblock (B) Hinterschneidungen aufweist, die bei der generativen Fertigung gebildet werden durch Zonen, in denen keine Materialschicht aufgebaut wird,
**dadurch gekennzeichnet**,
f) dass ein erster Hebel (H) vorgesehen ist, der sich zwischen einem ersten Endbereich (H₁) und einem zweiten Endbereich (H₂) erstreckt, wobei der erste Hebel (H) an seinem ersten Endbereich (H₁) an ein wenigstens ein ein Lastgelenk (G_{L}) umfassendes Koppelelement (K) zur Weiterleitung einer Kraft anschließt, und wobei der erste Hebel (H) über ein Stützgelenk (Gs) mit dem Festland (F) verbunden ist, und wobei sowohl das Stützgelenk (Gs) als auch das Lastgelenk (G_{L}) jeweils eine Schwenkachse (A_{GS}, A_{GL}) ausbilden, und
g) dass wenigstens ein mit einem Hebel (H, M) verbundenes Lastgelenk (G_{L}) oder Stützgelenk (Gs), bezogen auf die Richtung seiner Schwenkachse, auf einer oder beiden Seiten von einem Materialabschnitt dieses Hebel eingefasst ist.

3. Wägeblock (B), der sich in einer Längsrichtung (X), in einer zur Längsrichtung (X) orthogonalen Querrichtung (Y) und in einer zu den beiden Richtungen (X, Y) orthogonalen Höhenrichtung (Z) erstreckt, wobei der Wägeblock (B) umfasst
a) ein Festland (F) zur Abstützung von Lenkern oder Hebeln,
b) zwei Lenker (Lₒ, Lᵤ), wobei sich jeder der beiden Lenker in Längsrichtung (X) von einem ersten Endbereich zu einem dem ersten Ende gegenüberliegenden zweiten Endbereich erstreckt, wobei jeder Lenker (Lₒ, Lᵤ) über wenigstens ein Stützgelenk (Gs) mit dem Festland (F) verbunden ist,
c) einen Lastaufnehmer (A) zur Aufnahme einer entlang der Höhenrichtung (Z) eingeleiteten Gewichtskraft, wobei die beiden Lenker jeweils mit ihrem zweiten Ende über wenigstens ein Lenkergelenk (G_{R}) mit dem Lastaufnehmer (A) verbunden sind, so dass der Lastaufnehmer (A) relativ zum Festland in Höhenrichtung (Z) parallel geführt wird,
d) dass die einzelnen Komponenten des Wägeblocks (B) nach dem Prinzip der generativen Fertigung (3D-Druck) schichtweise aufgebaut und monolithisch zusammenhängend ausgebildet sind,
e) wobei der Wägeblock (B) Hinterschneidungen aufweist, die bei der generativen Fertigung gebildet werden durch Zonen, in denen keine Materialschicht aufgebaut wird,
**dadurch gekennzeichnet**,
f) dass ein erster Hebel (H) vorgesehen ist, der sich zwischen einem ersten Endbereich (H₁) und einem zweiten Endbereich (H₂) erstreckt, wobei der erste Hebel (H) an seinem ersten Endbereich (H₁) an ein wenigstens ein ein Lastgelenk (G_{L}) umfassendes Koppelelement (K) zur Weiterleitung einer Kraft anschließt, und wobei der erste Hebel (H) über ein Stützgelenk (Gs) mit dem Festland (F) verbunden ist, und wobei sowohl das Stützgelenk (Gs) als auch das Lastgelenk (G_{L}) jeweils eine Schwenkachse (A_{GS}, A_{GL}) ausbilden, und
g) dass wenigstens zwei am selben Hebel angreifende Gelenke, deren Schwenkachsen nicht fluchten, in Richtung ihrer Schwenkachsen so hintereinander liegen, dass sich die senkrecht zu ihren Schwenkachsen gebildeten Gelenk-Querschnitte in einer Projektion in Schwenkachsenrichtung überdecken.

4. Wägeblock (B), der sich in einer Längsrichtung (X), in einer zur Längsrichtung (X) orthogonalen Querrichtung (Y) und in einer zu den beiden Richtungen (X, Y) orthogonalen Höhenrichtung (Z) erstreckt, wobei der Wägeblock (B) umfasst
a) ein Festland (F) zur Abstützung von Lenkern oder Hebeln,
b) zwei Lenker (Lₒ, Lᵤ), wobei sich jeder der beiden Lenker in Längsrichtung (X) von einem ersten Endbereich zu einem dem ersten Ende gegenüberliegenden zweiten Endbereich erstreckt, wobei jeder Lenker (Lₒ, Lᵤ) über wenigstens ein Stützgelenk (Gs) mit dem Festland (F) verbunden ist,
c) einen Lastaufnehmer (A) zur Aufnahme einer entlang der Höhenrichtung (Z) eingeleiteten Gewichtskraft, wobei die beiden Lenker jeweils mit ihrem zweiten Ende über wenigstens ein Lenkergelenk (G_{R}) mit dem Lastaufnehmer (A) verbunden sind, so dass der Lastaufnehmer (A) relativ zum Festland in Höhenrichtung (Z) parallel geführt wird,
d) dass die einzelnen Komponenten des Wägeblocks (B) nach dem Prinzip der generativen Fertigung (3D-Druck) schichtweise aufgebaut und monolithisch zusammenhängend ausgebildet sind,
e) wobei der Wägeblock (B) Hinterschneidungen aufweist, die bei der generativen Fertigung gebildet werden durch Zonen, in denen keine Materialschicht aufgebaut wird,
**dadurch gekennzeichnet**,
f) dass ein erster Hebel (H) vorgesehen ist, der sich zwischen einem ersten Endbereich (H₁) und einem zweiten Endbereich (H₂) erstreckt, wobei der erste Hebel (H) an seinem ersten Endbereich (H₁) an ein wenigstens ein ein Lastgelenk (G_{L}) umfassendes Koppelelement (K) zur Weiterleitung einer Kraft anschließt, und wobei der erste Hebel (H) über ein Stützgelenk (Gs) mit dem Festland (F) verbunden ist, und wobei sowohl das Stützgelenk (Gs) als auch das Lastgelenk (G_{L}) jeweils eine Schwenkachse (A_{GS}, A_{GL}) ausbilden, und
g) dass der in einer Richtung (X, Y, Z) bestehende Schwenkachsenabstand zweier mit demselben Hebel verbundenen Gelenke größer ist als Null und kleiner ist als die Ausdehnung wenigstens eines der Gelenke in dieser Richtung.

5. Wägeblock (B), der sich in einer Längsrichtung (X), in einer zur Längsrichtung (X) orthogonalen Querrichtung (Y) und in einer zu den beiden Richtungen (X, Y) orthogonalen Höhenrichtung (Z) erstreckt, wobei der Wägeblock (B) umfasst
a) ein Festland (F) zur Abstützung von Lenkern oder Hebeln,
b) zwei Lenker (Lₒ, Lᵤ), wobei sich jeder der beiden Lenker in Längsrichtung (X) von einem ersten Endbereich zu einem dem ersten Ende gegenüberliegenden zweiten Endbereich erstreckt, wobei jeder Lenker (Lₒ, Lᵤ) über wenigstens ein Stützgelenk (Gs) mit dem Festland (F) verbunden ist,
c) einen Lastaufnehmer (A) zur Aufnahme einer entlang der Höhenrichtung (Z) eingeleiteten Gewichtskraft, wobei die beiden Lenker jeweils mit ihrem zweiten Ende über wenigstens ein Lenkergelenk (G_{R}) mit dem Lastaufnehmer (A) verbunden sind, so dass der Lastaufnehmer (A) relativ zum Festland in Höhenrichtung (Z) parallel geführt wird,
d) dass die einzelnen Komponenten des Wägeblocks (B) nach dem Prinzip der generativen Fertigung (3D-Druck) schichtweise aufgebaut und monolithisch zusammenhängend ausgebildet sind,
e) wobei der Wägeblock (B) Hinterschneidungen aufweist, die bei der generativen Fertigung gebildet werden durch Zonen, in denen keine Materialschicht aufgebaut wird,
**dadurch gekennzeichnet**,
f) dass ein erster Hebel (H) vorgesehen ist, der sich zwischen einem ersten Endbereich (H₁) und einem zweiten Endbereich (H₂) erstreckt, wobei der erste Hebel (H) an seinem ersten Endbereich (H₁) an ein wenigstens ein ein Lastgelenk (G_{L}) umfassendes Koppelelement (K) zur Weiterleitung einer Kraft anschließt, und wobei der erste Hebel (H) über ein Stützgelenk (Gs) mit dem Festland (F) verbunden ist, und wobei sowohl das Stützgelenk (Gs) als auch das Lastgelenk (G_{L}) jeweils eine Schwenkachse (A_{GS}, A_{GL}) ausbilden, und
g) dass wenigstens ein Hebel (H, M) eine Tasche (T) aufweist zur Aufnahme eines ersten Gelenks.

6. Wägeblock (B), der sich in einer Längsrichtung (X), in einer zur Längsrichtung (X) orthogonalen Querrichtung (Y) und in einer zu den beiden Richtungen (X, Y) orthogonalen Höhenrichtung (Z) erstreckt, wobei der Wägeblock (B) umfasst
a) ein Festland (F) zur Abstützung von Lenkern oder Hebeln,
b) zwei Lenker (Lₒ, Lᵤ), wobei sich jeder der beiden Lenker in Längsrichtung (X) von einem ersten Endbereich zu einem dem ersten Ende gegenüberliegenden zweiten Endbereich erstreckt, wobei jeder Lenker (Lₒ, Lᵤ) über wenigstens ein Stützgelenk (Gs) mit dem Festland (F) verbunden ist,
c) einen Lastaufnehmer (A) zur Aufnahme einer entlang der Höhenrichtung (Z) eingeleiteten Gewichtskraft, wobei die beiden Lenker jeweils mit ihrem zweiten Ende über wenigstens ein Lenkergelenk (G_{R}) mit dem Lastaufnehmer (A) verbunden sind, so dass der Lastaufnehmer (A) relativ zum Festland in Höhenrichtung (Z) parallel geführt wird,
d) dass die einzelnen Komponenten des Wägeblocks (B) nach dem Prinzip der generativen Fertigung (3D-Druck) schichtweise aufgebaut und monolithisch zusammenhängend ausgebildet sind,
e) wobei der Wägeblock (B) Hinterschneidungen aufweist, die bei der generativen Fertigung gebildet werden durch Zonen, in denen keine Materialschicht aufgebaut wird,
**dadurch gekennzeichnet**,
f) dass ein erster Hebel (H) vorgesehen ist, der sich zwischen einem ersten Endbereich (H₁) und einem zweiten Endbereich (H₂) erstreckt, wobei der erste Hebel (H) an seinem ersten Endbereich (H₁) an ein wenigstens ein ein Lastgelenk (G_{L}) umfassendes Koppelelement (K) zur Weiterleitung einer Kraft anschließt, und wobei der erste Hebel (H) über ein Stützgelenk (Gs) mit dem Festland (F) verbunden ist, und wobei sowohl das Stützgelenk (Gs) als auch das Lastgelenk (G_{L}) jeweils eine Schwenkachse (A_{GS}, A_{GL}) ausbilden, und
g) dass ein zweiter Hebel (M) vorgesehen ist, der sich zwischen einem ersten Endbereich (M₁) und einem zweiten Endbereich (M₂) erstreckt und an seinem ersten Endbereich (M₁) über ein ein Lastgelenk (G_{L}) aufweisendes Koppelelement (K) mit dem zweiten Endbereich (H₂) des ersten Hebels (H) und über ein Stützgelenk (Gs) mit dem Festland verbunden ist, und wobei sowohl das Stützgelenk (Gs) als auch das Lastgelenk (G_{L}) jeweils eine Schwenkachse ausbilden.

7. Wägeblock (B) nach dem vorhergehenden Anspruch, **dadurch gekennzeichnet, dass** einer der beiden Hebel (H, M) eine Ausnehmung aufweist, in welcher ein Abschnitt des anderen Hebels (M, H) angeordnet ist.

8. Wägeblock (B), der sich in einer Längsrichtung (X), in einer zur Längsrichtung (X) orthogonalen Querrichtung (Y) und in einer zu den beiden Richtungen (X, Y) orthogonalen Höhenrichtung (Z) erstreckt, wobei der Wägeblock (B) umfasst
a) ein Festland (F) zur Abstützung von Lenkern oder Hebeln,
b) zwei Lenker (Lₒ, Lᵤ), wobei sich jeder der beiden Lenker in Längsrichtung (X) von einem ersten Endbereich zu einem dem ersten Ende gegenüberliegenden zweiten Endbereich erstreckt, wobei jeder Lenker (Lₒ, Lᵤ) über wenigstens ein Stützgelenk (Gs) mit dem Festland (F) verbunden ist,
c) einen Lastaufnehmer (A) zur Aufnahme einer entlang der Höhenrichtung (Z) eingeleiteten Gewichtskraft, wobei die beiden Lenker jeweils mit ihrem zweiten Ende über wenigstens ein Lenkergelenk (G_{R}) mit dem Lastaufnehmer (A) verbunden sind, so dass der Lastaufnehmer (A) relativ zum Festland in Höhenrichtung (Z) parallel geführt wird,
d) dass die einzelnen Komponenten des Wägeblocks (B) nach dem Prinzip der generativen Fertigung (3D-Druck) schichtweise aufgebaut und monolithisch zusammenhängend ausgebildet sind,
e) wobei der Wägeblock (B) Hinterschneidungen aufweist, die bei der generativen Fertigung gebildet werden durch Zonen, in denen keine Materialschicht aufgebaut wird,
**dadurch gekennzeichnet**,
f) dass der Lastaufnehmer (L) und/oder das Festland (F) von einer in Längsrichtung (X) verlaufenden Ausnehmung durchdrungen ist, in welcher wenigstens ein Gelenk, insbesondere Stützgelenk (Gs), angeordnet ist.

9. Wägeblock (B), der sich in einer Längsrichtung (X), in einer zur Längsrichtung (X) orthogonalen Querrichtung (Y) und in einer zu den beiden Richtungen (X, Y) orthogonalen Höhenrichtung (Z) erstreckt, wobei der Wägeblock (B) umfasst
a) ein Festland (F) zur Abstützung von Lenkern oder Hebeln,
b) zwei Lenker (Lₒ, Lᵤ), wobei sich jeder der beiden Lenker in Längsrichtung (X) von einem ersten Endbereich zu einem dem ersten Ende gegenüberliegenden zweiten Endbereich erstreckt, wobei jeder Lenker (Lₒ, Lᵤ) über wenigstens ein Stützgelenk (Gs) mit dem Festland (F) verbunden ist,
c) einen Lastaufnehmer (A) zur Aufnahme einer entlang der Höhenrichtung (Z) eingeleiteten Gewichtskraft, wobei die beiden Lenker jeweils mit ihrem zweiten Ende über wenigstens ein Lenkergelenk (G_{R}) mit dem Lastaufnehmer (A) verbunden sind, so dass der Lastaufnehmer (A) relativ zum Festland in Höhenrichtung (Z) parallel geführt wird,
d) dass die einzelnen Komponenten des Wägeblocks (B) nach dem Prinzip der generativen Fertigung (3D-Druck) schichtweise aufgebaut und monolithisch zusammenhängend ausgebildet sind,
e) wobei der Wägeblock (B) Hinterschneidungen aufweist, die bei der generativen Fertigung gebildet werden durch Zonen, in denen keine Materialschicht aufgebaut wird,
**dadurch gekennzeichnet**,
f) dass wenigstens ein Abschnitt eines Hebel (H, M) oder eines Gelenks (Gs, G_{R}, G_{L}) oder eines Lenkers (Lₒ, Lᵤ), oder des Festlands (F) oder des Lastaufnehmers (A) oder des Koppelelementes (K), vorzugsweise alle Komponenten des Wägeblocks, als Stabwerk ausgebildet sind.

10. Wägeblock (B), der sich in einer Längsrichtung (X), in einer zur Längsrichtung (X) orthogonalen Querrichtung (Y) und in einer zu den beiden Richtungen (X, Y) orthogonalen Höhenrichtung (Z) erstreckt, wobei der Wägeblock (B) umfasst
a) ein Festland (F) zur Abstützung von Lenkern oder Hebeln,
b) zwei Lenker (Lₒ, Lᵤ), wobei sich jeder der beiden Lenker in Längsrichtung (X) von einem ersten Endbereich zu einem dem ersten Ende gegenüberliegenden zweiten Endbereich erstreckt, wobei jeder Lenker (Lₒ, Lᵤ) über wenigstens ein Stützgelenk (Gs) mit dem Festland (F) verbunden ist,
c) einen Lastaufnehmer (A) zur Aufnahme einer entlang der Höhenrichtung (Z) eingeleiteten Gewichtskraft, wobei die beiden Lenker jeweils mit ihrem zweiten Ende über wenigstens ein Lenkergelenk (G_{R}) mit dem Lastaufnehmer (A) verbunden sind, so dass der Lastaufnehmer (A) relativ zum Festland in Höhenrichtung (Z) parallel geführt wird,
d) dass die einzelnen Komponenten des Wägeblocks (B) nach dem Prinzip der generativen Fertigung (3D-Druck) schichtweise aufgebaut und monolithisch zusammenhängend ausgebildet sind,
e) wobei der Wägeblock (B) Hinterschneidungen aufweist, die bei der generativen Fertigung gebildet werden durch Zonen, in denen keine Materialschicht aufgebaut wird,
**dadurch gekennzeichnet**,
f) dass wenigstens zwei Komponenten (1, 2) des Wägeblocks in einem Schnitt quer zu einer Richtung (X, Y, Z), insbesondere zur Längsrichtung (X), jeweils einen Querschnitt mit einer aus mehreren getrennten Teilflächen (T₁, T₂) bestehenden Querschnittsfläche ausbilden, und wobei sich die Hüllkurven (V₁, V₂) der beiden Querschnitte wenigstens teilweise überdecken, und wobei jeweils mindestens eine Teilfläche des einen Querschnitts innerhalb der Hüllkurve des anderen Querschnitts liegt, und wobei zu den Komponenten zählen: Festland (F), Lastaufnehmer (A), Hebel (H, M), Koppelelement (K), Lenker, Gelenk (G_{L}, Gs, G_{R}).

11. Komponente eines Wägeblocks (B) nach einem der vorgehenden Ansprüche wobei die Komponente ein Hebel (H, M) oder ein Festland (F) oder ein Lastaufnehmer (A) oder ein Gelenk (G_{L}, Gs, G_{R}) oder ein Lenker (Lₒ, Lᵤ) oder ein Koppelelement (K) ist.

12. Verfahren zur Herstellung eines monolithischen Wägeblocks (B) nach einem der vorhergehenden Ansprüche, wobei die einzelnen Komponenten durch das wiederholte Aufbringen dünner Materialschichten aufeinander (3D-Druck) gebildet werden, vorzugsweise, in dem der Materialaufbau einer Komponente des Wägeblocks unterbrochen wird durch den Materialaufbau wenigstens einer anderen Komponente.

13. Verfahren nach Anspruch 12, zur Herstellung wenigstens einer monolithischen Komponente eines monolithischen Wägeblocks (B) nach einem der Ansprüche 1-10, umfassend die generative Fertigung (3D-Druck) der wenigstens einen Komponente, wobei die wenigstens eine Komponente ein Hebel (H, M) oder/ein Festland (F) und/oder ein Lastaufnehmer (A) und/oder ein Gelenk (G_{L}, Gs, G_{R}) und/oder ein Lenker (Lₒ, Lᵤ) oder ein Koppelelement (K) ist.

14. Wägeblock (B) nach einem der vorigen Ansprüche 1 bis 10, **dadurch gekennzeichnet, dass** der Wägeblock teilweise oder vollständig aus Metall, vorzugsweise Aluminium oder einer Aluminiumlegierung, gebildet ist.

15. Wägeblock (B) nach einem der Ansprüche 8 bis 10, **dadurch gekennzeichnet, dass** ein erster Hebel (H) vorgesehen ist, der sich zwischen einem ersten Endbereich (H₁) und einem zweiten Endbereich (H₂) erstreckt, wobei der erste Hebel (H) an seinem ersten Endbereich (H₁) an ein wenigstens ein ein Lastgelenk (G_{L}) umfassendes Koppelelement (K) zur Weiterleitung einer Kraft anschließt, und wobei der erste Hebel (H) über ein Stützgelenk (Gs) mit dem Festland (F) verbunden ist, und wobei sowohl das Stützgelenk (Gs) als auch das Lastgelenk (G_{L}) jeweils eine Schwenkachse (A_{GS}, A_{GL}) ausbilden.

## Claims

1. A weighing block (B) extending in a longitudinal direction (X) in a transverse direction (Y) orthogonal to the longitudinal direction (X) and extending in a vertical direction (Z) orthogonal to the two directions (X, Y), wherein the weighing block (B) comprises:
a) a fixed land (F) for supporting control arms or levers,
b) two control arms (LₒLᵤ), wherein each of the two control arms extends in the longitudinal direction (X) from a first end portion to a second end portion opposite the first end, wherein each control arm (LₒLᵤ) is connected via at least one support joint (Gs) to the fixed land (F),
c) a load receiver (A) for receiving a weight force introduced along the height direction (Z), wherein the two control arms each having their second end via at least one link joint (G_{R}) are connected to the load receiver (A) so that the load receiver (A) is guided in parallel relative to the fixed land in the height direction (Z),
d) that the individual components of the weighing block (B) are built up in layers according to the principle of additive manufacturing (3D printing) and are monolithically coherent,
e) wherein the weighing block (B) has undercuts which are formed during additive manufacturing by zones in which no material layer is built up,
**characterized in**
f) **that** a first lever (H) is provided, which is arranged between a first end portion (H₁) and a second end portion (H₂), wherein the first lever (H) connects at its first end portion (H₁) to an at least one load joint (G_{L}) comprising a coupling element (K) for forwarding a force, and wherein the first lever (H) is connected via a support joint (Gs) to the fixed land (F), and wherein both the support joint (Gs) as well as the load joint (G_{L}) build a pivot axis (A_{GS}, a_{GL}), and
g) **that** the load joint (G_{L}) in order to connect two portions of the weighing block to one another in an articulated manner, in the form of a cross-spring joint, in which at least two material webs together connect the first portion to the second portion, and wherein one of the material webs forms an angle (α) with another material web in a projection along the pivot axis, with 45° ≤ α ≤ 135°, preferably α = 90°.

2. A weighing block (B) extending in a longitudinal direction (X) in a transverse direction (Y) orthogonal to the longitudinal direction (X) and extending in a vertical direction (Z) orthogonal to the two directions (X, Y), wherein the weighing block (B) comprises:
a) a fixed land (F) for supporting control arms or levers,
b) two control arms (LₒLᵤ), wherein each of the two control arms extends in the longitudinal direction (X) from a first end portion to a second end portion opposite the first end, wherein each control arm (LₒLᵤ) is connected via at least one support joint (Gs) to the fixed land (F),
c) a load receiver (A) for receiving a weight force introduced along the height direction (Z), wherein the two control arms each having their second end via at least one link joint (G_{R}) are connected to the load receiver (A) so that the load receiver (A) is guided in parallel relative to the fixed land in the height direction (Z),
d) that the individual components of the weighing block (B) are built up in layers according to the principle of additive manufacturing (3D printing) and are monolithically coherent,
e) wherein the weighing block (B) has undercuts which are formed during additive manufacturing by zones in which no material layer is built up, **characterized in**
f) **that** a first lever (H) is provided, which is arranged between a first end portion (H₁) and a second end portion (H₂), wherein the first lever (H) connects at its first end portion (H₁) to an at least one load joint (G_{L}) comprising a coupling element (K) for forwarding a force, and wherein the first lever (H) is connected via a support joint (Gs) to the fixed land (F), and wherein both the support joint (Gs) as well as the load joint (G_{L}) build a pivot axis (A_{GS}, a_{GL}), and
g) **that** at least one load joint (G) connected to a lever (H, M) (G_{L}) or support joint (Gs), in relation to the direction of its pivot axis, is enclosed on one or both sides by a material section of this lever.

3. A weighing block (B) extending in a longitudinal direction (X) in a transverse direction (Y) orthogonal to the longitudinal direction (X) and extending in a vertical direction (Z) orthogonal to the two directions (X, Y), wherein the weighing block (B) comprises:
a) a fixed land (F) for supporting control arms or levers,
b) two control arms (LₒLᵤ), wherein each of the two control arms extends in the longitudinal direction (X) from a first end portion to a second end portion opposite the first end, wherein each control arm (LₒLᵤ) is connected via at least one support joint (Gs) to the fixed land (F),
c) a load receiver (A) for receiving a weight force introduced along the height direction (Z), wherein the two control arms each having their second end via at least one link joint (G_{R}) are connected to the load receiver (A) so that the load receiver (A) is guided in parallel relative to the fixed land in the height direction (Z),
d) that the individual components of the weighing block (B) are built up in layers according to the principle of additive manufacturing (3D printing) and are monolithically coherent,
e) wherein the weighing block (B) has undercuts which are formed during additive manufacturing by zones in which no material layer is built up,
**characterized in**
f) **that** a first lever (H) is provided, which is arranged between a first end portion (H₁) and a second end portion (H₂), wherein the first lever (H) connects at its first end portion (H₁) to an at least one load joint (G_{L}) comprising a coupling element (K) for forwarding a force, and wherein the first lever (H) is connected via a support joint (Gs) to the fixed land (F), and wherein both the support joint (Gs) as well as the load joint (G_{L}) build a pivot axis (A_{GS}, a_{GL}), and
g) **that** at least two joints acting on the same lever, whose pivot axes are not aligned, are located one behind the other in the direction of their pivot axes in such a way that the joint cross-sections formed perpendicularly to their pivot axes overlap in a projection in the direction of the pivot axes.

4. A weighing block (B) extending in a longitudinal direction (X) in a transverse direction (Y) orthogonal to the longitudinal direction (X) and extending in a vertical direction (Z) orthogonal to the two directions (X, Y), wherein the weighing block (B) comprises:
a) a fixed land (F) for supporting control arms or levers,
b) two control arms (LₒLᵤ), wherein each of the two control arms extends in the longitudinal direction (X) from a first end portion to a second end portion opposite the first end, wherein each control arm (LₒLᵤ) is connected via at least one support joint (Gs) to the fixed land (F),
c) a load receiver (A) for receiving a weight force introduced along the height direction (Z), wherein the two control arms each having their second end via at least one link joint (G_{R}) are connected to the load receiver (A) so that the load receiver (A) is guided in parallel relative to the fixed land in the height direction (Z),
d) that the individual components of the weighing block (B) are built up in layers according to the principle of additive manufacturing (3D printing) and are monolithically coherent,
e) wherein the weighing block (B) has undercuts which are formed during additive manufacturing by zones in which no material layer is built up,
**characterized in**
f) **that** a first lever (H) is provided, which is arranged between a first end portion (H₁) and a second end portion (H₂), wherein the first lever (H) connects at its first end portion (H₁) to an at least one load joint (G_{L}) comprising a coupling element (K) for forwarding a force, and wherein the first lever (H) is connected via a support joint (Gs) to the fixed land (F), and wherein both the support joint (Gs) as well as the load joint (G_{L}) build a pivot axis (A_{GS}, a_{GL}), and
g) **that** the pivot axis distance of two joints connected to the same lever in one direction (X, Y, Z) is greater than zero and less than the extension of at least one of the joints in this direction.

5. The weighing block (B) extending in a longitudinal direction (X) in a transverse direction (Y) orthogonal to the longitudinal direction (X) and extending in a vertical direction (Z) orthogonal to the two directions (X, Y), wherein the weighing block (B) comprises:
a) a fixed land (F) for supporting control arms or levers,
b) two control arms (LₒLᵤ), wherein each of the two control arms extends in the longitudinal direction (X) from a first end portion to a second end portion opposite the first end, wherein each control arm (LₒLᵤ) is connected via at least one support joint (Gs) to the fixed land (F),
c) a load receiver (A) for receiving a weight force introduced along the height direction (Z), wherein the two control arms each having their second end via at least one link joint (G_{R}) are connected to the load receiver (A) so that the load receiver (A) is guided in parallel relative to the fixed land in the height direction (Z),
d) that the individual components of the weighing block (B) are built up in layers according to the principle of additive manufacturing (3D printing) and are monolithically coherent,
e) wherein the weighing block (B) has undercuts which are formed during additive manufacturing by zones in which no material layer is built up,
**characterized in**
f) **that** a first lever (H) is provided, which is arranged between a first end portion (H₁) and a second end portion (H₂), wherein the first lever (H) connects at its first end portion (H₁) to an at least one load joint (G_{L}) comprising a coupling element (K) for forwarding a force, and wherein the first lever (H) is connected via a support joint (Gs) to the fixed land (F), and wherein both the support joint (Gs) as well as the load joint (G_{L}) build a pivot axis (A_{GS}, a_{GL}), and
g) **that** at least one lever (H, m) has a pocket (T) for receiving a first joint.

6. A weighing block (B) extending in a longitudinal direction (X) in a transverse direction (Y) orthogonal to the longitudinal direction (X) and extending in a vertical direction (Z) orthogonal to the two directions (X, Y), wherein the weighing block (B) comprises:
a) a fixed land (F) for supporting control arms or levers,
b) two control arms (LₒLᵤ), wherein each of the two control arms extends in the longitudinal direction (X) from a first end portion to a second end portion opposite the first end, wherein each control arm (LₒLᵤ) is connected via at least one support joint (Gs) to the fixed land (F),
c) a load receiver (A) for receiving a weight force introduced along the height direction (Z), wherein the two control arms each having their second end via at least one link joint (G_{R}) are connected to the load receiver (A) so that the load receiver (A) is guided in parallel relative to the fixed land in the height direction (Z),
d) that the individual components of the weighing block (B) are built up in layers according to the principle of additive manufacturing (3D printing) and are monolithically coherent,
e) wherein the weighing block (B) has undercuts which are formed during additive manufacturing by zones in which no material layer is built up,
**characterized in**
f) **that** a first lever (H) is provided, which is arranged between a first end portion (H₁) and a second end portion (H₂), wherein the first lever (H) connects at its first end portion (H₁) to an at least one load joint (G_{L}) comprising a coupling element (K) for forwarding a force, and wherein the first lever (H) is connected via a support joint (Gs) to the fixed land (F), and wherein both the support joint (Gs) as well as the load joint (G_{L}) build a pivot axis (A_{GS}, A_{GL}), and
g) **that** a second lever (M) is provided, which is arranged between a first end portion (M₁) and a second end portion (M₂) and at its first end portion (M₁) via a load joint (G_{L}) with a coupling element (K) having the second end portion (H₂) of the first lever (H) and wherein a support joint (Gs) is connected to the fixed land and wherein both the support joint (Gs) and the load joint (G_{L}) each form a pivot axis.

7. The weighing block (B) according to the preceding claim,
**characterized in that** one of the two levers (H, M) has a recess in which a portion of the other lever (M, H) is arranged.

8. A weighing block (B) extending in a longitudinal direction (X) in a transverse direction (Y) orthogonal to the longitudinal direction (X) and extending in a vertical direction (Z) orthogonal to the two directions (X, Y), wherein the weighing block (B) comprises:
a) a fixed land (F) for supporting control arms or levers,
b) two control arms (LₒLᵤ), wherein each of the two control arms extends in the longitudinal direction (X) from a first end portion to a second end portion opposite the first end, wherein each control arm (LₒLᵤ) is connected via at least one support joint (Gs) to the fixed land (F),
c) a load receiver (A) for receiving a weight force introduced along the height direction (Z), wherein the two control arms each having their second end via at least one link joint (G_{R}) are connected to the load receiver (A) so that the load receiver (A) is guided in parallel relative to the fixed land in the height direction (Z),
d) that the individual components of the weighing block (B) are built up in layers according to the principle of additive manufacturing (3D printing) and are monolithically coherent,
e) wherein the weighing block (B) has undercuts which are formed during additive manufacturing by zones in which no material layer is built up,
**characterized in**
f) **that** the load receiver (L) and/or the fixed land (F) is penetrated by a recess extending in the longitudinal direction (X), in which recess at least one joint, in particular support joint (Gs) is arranged.

9. A weighing block (B) extending in a longitudinal direction (X) in a transverse direction (Y) orthogonal to the longitudinal direction (X) and extending in a vertical direction (Z) orthogonal to the two directions (X, Y), wherein the weighing block (B) comprises:
a) a fixed land (F) for supporting control arms or levers,
b) two control arms (LₒLᵤ), wherein each of the two control arms extends in the longitudinal direction (X) from a first end portion to a second end portion opposite the first end, wherein each control arm (LₒLᵤ) is connected via at least one support joint (Gs) to the fixed land (F),
c) a load receiver (A) for receiving a weight force introduced along the height direction (Z), wherein the two control arms each having their second end via at least one link joint (G_{R}) are connected to the load receiver (A) so that the load receiver (A) is guided in parallel relative to the fixed land in the height direction (Z),
d) that the individual components of the weighing block (B) are built up in layers according to the principle of additive manufacturing (3D printing) and are monolithically coherent,
e) wherein the weighing block (B) has undercuts which are formed during additive manufacturing by zones in which no material layer is built up,
**characterized in**
f) **that** at least a portion of a lever (H, m) or a joint (Gs, G_{R}, G_{L}) or a control arm (LₒLᵤ) or the fixed land (F) or the load receiver (A) or the coupling element (K), preferably all components of the weighing block, are designed as A girder.

10. A weighing block (B) extending in a longitudinal direction (X) in a transverse direction (Y) orthogonal to the longitudinal direction (X) and extending in a vertical direction (Z) orthogonal to the two directions (X, y), wherein the weighing block (B) comprises:
a) a fixed land (F) for supporting control arms or levers,
b) two control arms (LₒLᵤ), wherein each of the two control arms extends in the longitudinal direction (X) from a first end portion to a second end portion opposite the first end, wherein each control arm (LₒLᵤ) is connected via at least one support joint (Gs) to the fixed land (F),
c) a load receiver (A) for receiving a weight force introduced along the height direction (Z), wherein the two control arms each having their second end via at least one link joint (G_{R}) are connected to the load receiver (A) so that the load receiver (A) is guided in parallel relative to the fixed land in the height direction (Z),
d) that the individual components of the weighing block (B) are built up in layers according to the principle of additive manufacturing (3D printing) and are monolithically coherent,
e) wherein the weighing block (B) has undercuts which are formed during additive manufacturing by zones in which no material layer is built up,
**characterized in**
f) **that** at least two components (1, 2) of the weighing block in a section transverse to a direction (X, Y, Z), in particular to the longitudinal direction (X), each have a cross section with one of a plurality of separated partial surfaces (T₁, t₂) form A cross-sectional area, and wherein the envelope curves (V₁, V₂) of the two cross sections at least partially overlap, and wherein in each case at least one partial area of the one cross section lies within the envelope curve of the other cross section, and wherein the components include: a fixed land (F), a load receptor (A), a lever (H, m), a coupling element (K), a control arm, a joint (G_{L}, gs, G_{R}).

11. A component of a weighing block (B) according to any of the preceding claims, wherein the component is a lever (H, M) or a fixed land (F) or a load receiver (A) or a joint (G_{L}, gs, g_{R}) or a link (LₒLᵤ) or a coupling element (K).

12. A method for producing a monolithic weighing block (B) according to any of the preceding claims, wherein the individual components are formed by the repeated application of thin material layers to one another (3D printing), preferably in that the material structure of a component of the weighing block is interrupted by the material structure of at least one other component.

13. The method according to claim 12, for producing at least one monolithic component of b monolithic weighing block (B) according to any of claims 1-10 comprising the additive manufacturing (3D-printing) of the at least one component, wherein the at least one component comprises a lever (H, m) and/or a fixed land (F) and/or a load receiver (A) and/or a joint (G_{L}, Gs, G_{R}) and/or a control arm (LₒLᵤ) or a coupling element (K).

14. The weighing block (B) according to any of the preceding claims 1 to 10, **characterized in that** the weighing block is partially or completely formed of metal, preferably aluminum or an aluminum alloy.

15. The weighing block (B) according to any of claims 8 to 10,
**characterized in that** a first lever (H) is provided, which is arranged between a first end portion (H₁) and a second end portion (H₂), wherein the first lever (H) comprises a coupling element (K) at its first end region (H₁) to an at least one load joint (G_{L}) for forwarding a force, and wherein the first lever (H) is connected via a support joint (Gs) to the fixed land (F), and wherein both the support joint (Gs) as well as the load joint (G_{L}) form a pivot axis (A_{GS}, a_{GL}).

## Revendications

1. Bloc de pesage (B) qui s'étend dans une direction longitudinale (X), dans une direction transversale (Y) orthogonale à la direction longitudinale (X) et dans une direction de hauteur (Z) orthogonale aux deux directions (X, Y), le bloc de pesage (B) comprenant
a) une partie fixe (F) destinée à supporter des guidons ou des leviers,
b) deux guidons (Lₒ, Lᵤ), chacun des deux guidons s'étendant dans la direction longitudinale (X) d'une première région d'extrémité à une seconde région d'extrémité opposée à la première extrémité, chaque guidon (Lₒ, Lᵤ) étant relié à la partie fixe (F) par l'intermédiaire d'au moins une articulation de support (Gs),
c) un dispositif de réception de charge (A) destiné à recevoir une force de poids introduite le long de la direction de hauteur (Z), les deux guidons étant reliés respectivement par leur seconde extrémité au dispositif de réception de charge (A) par l'intermédiaire d'au moins une articulation de guidon (G_{R}), de sorte que le dispositif de réception de charge (A) est guidé parallèlement par rapport à la partie fixe dans la direction de hauteur (Z),
d) en ce que les composants individuels du bloc de pesage (B) sont construits en couches selon le principe de la fabrication générative (impression 3D) et sont réalisés de manière monolithique et cohérente,
e) le bloc de pesage (B) présentant des contre-dépouilles qui sont formées lors de la fabrication générative par des zones dans lesquelles aucune couche de matériau n'est construite,
**caractérisé en ce**
f) **qu**'un premier levier (H) est prévu, lequel s'étend entre une première région d'extrémité (H₁) et une seconde région d'extrémité (H₂), le premier levier (H) se raccordant au niveau de sa première région d'extrémité (H₁) à un élément d'accouplement (K) comprenant au moins une une articulation de charge (G_{L}) pour la transmission d'une force, et le premier levier (H) étant relié à la partie fixe (F) par l'intermédiaire d'une articulation de support (Gs), et aussi bien l'articulation de support (Gs) que l'articulation de charge (G_{L}) formant respectivement un axe de pivotement (A_{GS}, A_{GL}), et
g) **que** l'articulation de charge (G_{L}), pour relier de manière articulée deux sections du bloc de pesage entre elles, est réalisée sous la forme d'une articulation à ressorts croisés, dans laquelle au moins deux barres de matériau relient conjointement la première section à la seconde section, et l'une des barres de matériau formant, dans une projection le long de l'axe de pivotement, un angle (α) avec une autre barre de matériau, avec 45° ≤ α ≤ 135°, de préférence α = 90°.

2. Bloc de pesage (B) qui s'étend dans une direction longitudinale (X), dans une direction transversale (Y) orthogonale à la direction longitudinale (X) et dans une direction de hauteur (Z) orthogonale aux deux directions (X, Y), le bloc de pesage (B) comprenant
a) une partie fixe (F) destinée à soutenir des guidons ou des leviers,
b) deux guidons (Lₒ, Lᵤ), chacun des deux guidons s'étendant dans la direction longitudinale (X) d'une première région d'extrémité à une seconde région d'extrémité opposée à la première extrémité, chaque guidon (Lₒ, Lᵤ) étant relié à la partie fixe (F) par l'intermédiaire d'au moins une articulation de support (Gs),
c) un dispositif de réception de charge (A) destiné à recevoir une force de poids introduite le long de la direction de hauteur (Z), les deux guidons étant reliés respectivement par leur seconde extrémité au dispositif de réception de charge (A) par l'intermédiaire d'au moins une articulation de guidon (G_{R}), de sorte que le dispositif de réception de charge (A) est guidé parallèlement par rapport à la partie fixe dans la direction de hauteur (Z),
d) en ce que les composants individuels du bloc de pesage (B) sont construits en couches selon le principe de la fabrication générative (impression 3D) et sont réalisés de manière monolithique et cohérente,
e) le bloc de pesage (B) présentant des contre-dépouilles qui sont formées lors de la fabrication générative par des zones dans lesquelles aucune couche de matériau n'est construite,
**caractérisé en ce**
f) **qu**'un premier levier (H) est prévu, lequel s'étend entre une première région d'extrémité (H₁) et une seconde région d'extrémité (H₂), le premier levier (H) se raccordant au niveau de sa première région d'extrémité (H₁) à un élément d'accouplement (K) comprenant au moins une une articulation de charge (G_{L}) pour la transmission d'une force, et le premier levier (H) étant relié à la partie fixe (F) par l'intermédiaire d'une articulation de support (Gs), et aussi bien l'articulation de support (Gs) que l'articulation de charge (G_{L}) formant respectivement un axe de pivotement (A_{GS}, A_{GL}), et
g) **qu**'au moins une articulation de charge (G_{L}) ou une articulation de support (Gs) reliée à un levier (H, M) est bordée sur un côté ou sur les deux côtés, par rapport à la direction de son axe de pivotement, par une section de matériau dudit levier.

3. Bloc de pesage (B) qui s'étend dans une direction longitudinale (X), dans une direction transversale (Y) orthogonale à la direction longitudinale (X) et dans une direction de hauteur (Z) orthogonale aux deux directions (X, Y), le bloc de pesage (B) comprenant
a) une partie fixe (F) destinée à supporter des guidons ou des leviers,
b) deux guidons (Lₒ, Lᵤ), chacun des deux guidons s'étendant dans la direction longitudinale (X) d'une première région d'extrémité à une seconde région d'extrémité opposée à la première extrémité, chaque guidon (Lₒ, Lᵤ) étant relié à la partie fixe (F) par l'intermédiaire d'au moins une articulation de support (Gs),
c) un dispositif de réception de charge (A) destiné à recevoir une force de poids introduite le long de la direction de hauteur (Z), les deux guidons étant reliés respectivement par leur seconde extrémité au dispositif de réception de charge (A) par l'intermédiaire d'au moins une articulation de guidon (G_{R}), de sorte que le dispositif de réception de charge (A) est guidé parallèlement par rapport à la partie fixe dans la direction de hauteur (Z),
d) en ce que les composants individuels du bloc de pesage (B) sont construits en couches selon le principe de la fabrication générative (impression 3D) et sont réalisés de manière monolithique et cohérente,
e) le bloc de pesage (B) présentant des contre-dépouilles qui sont formées lors de la fabrication générative par des zones dans lesquelles aucune couche de matériau n'est construite,
**caractérisé en ce**
f) **qu'**un premier levier (H) est prévu, lequel s'étend entre une première région d'extrémité (H₁) et une seconde région d'extrémité (H₂), le premier levier (H) se raccordant au niveau de sa première région d'extrémité (H₁) à un élément d'accouplement (K) comprenant au moins une une articulation de charge (G_{L}) pour la transmission d'une force, et le premier levier (H) étant relié à la partie fixe (F) par l'intermédiaire d'une articulation de support (Gs), et aussi bien l'articulation de support (Gs) que l'articulation de charge (G_{L}) formant respectivement un axe de pivotement (A_{GS}, A_{GL}), et
g) **qu'**au moins deux articulations agissant sur le même levier et dont les axes de pivotement ne sont pas alignés se trouvent l'une derrière l'autre dans la direction de leurs axes de pivotement, de sorte que les sections transversales d'articulation formées perpendiculairement à leurs axes de pivotement se recouvrent dans une projection dans la direction des axes de pivotement.

4. Bloc de pesage (B) qui s'étend dans une direction longitudinale (X), dans une direction transversale (Y) orthogonale à la direction longitudinale (X) et dans une direction de hauteur (Z) orthogonale aux deux directions (X, Y), le bloc de pesage (B) comprenant
a) une partie fixe (F) destinée à supporter des guidons ou des leviers,
b) deux guidons (Lₒ, Lᵤ), chacun des deux guidons s'étendant dans la direction longitudinale (X) d'une première région d'extrémité à une seconde région d'extrémité opposée à la première extrémité, chaque guidon (Lₒ, Lᵤ) étant relié à la partie fixe (F) par l'intermédiaire d'au moins une articulation de support (Gs),
c) un dispositif de réception de charge (A) destiné à recevoir une force de poids introduite le long de la direction de hauteur (Z), les deux guidons étant reliés respectivement par leur seconde extrémité au dispositif de réception de charge (A) par l'intermédiaire d'au moins une articulation de guidon (G_{R}), de sorte que le dispositif de réception de charge (A) est guidé parallèlement par rapport à la partie fixe dans la direction de hauteur (Z),
d) en ce que les composants individuels du bloc de pesage (B) sont construits en couches selon le principe de la fabrication générative (impression 3D) et sont réalisés de manière monolithique et cohérente,
e) le bloc de pesage (B) présentant des contre-dépouilles qui sont formées lors de la fabrication générative par des zones dans lesquelles aucune couche de matériau n'est construite,
**caractérisé en ce**
f) **qu**'un premier levier (H) est prévu, lequel s'étend entre une première région d'extrémité (H₁) et une seconde région d'extrémité (H₂), le premier levier (H) se raccordant au niveau de sa première région d'extrémité (H₁) à un élément d'accouplement (K) comprenant au moins une une articulation de charge (G_{L}) pour la transmission d'une force, et le premier levier (H) étant relié à la partie fixe (F) par l'intermédiaire d'une articulation de support (Gs), et aussi bien l'articulation de support (Gs) que l'articulation de charge (G_{L}) formant respectivement un axe de pivotement (A_{GS}, A_{GL}), et
g) **que** la distance d'axe de pivotement se trouvant dans une direction (X, Y, Z) de deux articulations reliées au même levier est supérieure à zéro et est inférieure à l'extension d'au moins l'une des articulations dans ladite direction.

5. Bloc de pesage (B) qui s'étend dans une direction longitudinale (X), dans une direction transversale (Y) orthogonale à la direction longitudinale (X) et dans une direction de hauteur (Z) orthogonale aux deux directions (X, Y), le bloc de pesage (B) comprenant
a) une partie fixe (F) destinée à supporter des guidons ou des leviers,
b) deux guidons (Lₒ, Lᵤ), chacun des deux guidons s'étendant dans la direction longitudinale (X) d'une première région d'extrémité à une seconde région d'extrémité opposée à la première extrémité, chaque guidon (Lₒ, Lᵤ) étant relié à la partie fixe (F) par l'intermédiaire d'au moins une articulation de support (Gs),
c) un dispositif de réception de charge (A) destiné à recevoir une force de poids introduite le long de la direction de hauteur (Z), les deux guidons étant reliés respectivement par leur seconde extrémité au dispositif de réception de charge (A) par l'intermédiaire d'au moins une articulation de guidon (G_{R}), de sorte que le dispositif de réception de charge (A) est guidé parallèlement par rapport à la partie fixe dans la direction de hauteur (Z),
d) en ce que les composants individuels du bloc de pesage (B) sont construits en couches selon le principe de la fabrication générative (impression 3D) et sont réalisés de manière monolithique et cohérente,
e) le bloc de pesage (B) présentant des contre-dépouilles qui sont formées lors de la fabrication générative par des zones dans lesquelles aucune couche de matériau n'est construite,
**caractérisé en ce**
f) **qu**'un premier levier (H) est prévu, lequel s'étend entre une première région d'extrémité (H₁) et une seconde région d'extrémité (H₂), le premier levier (H) se raccordant au niveau de sa première région d'extrémité (H₁) à un élément d'accouplement (K) comprenant au moins une une articulation de charge (G_{L}) pour la transmission d'une force, et le premier levier (H) étant relié à la partie fixe (F) par l'intermédiaire d'une articulation de support (Gs), et aussi bien l'articulation de support (Gs) que l'articulation de charge (G_{L}) formant respectivement un axe de pivotement (A_{GS}, A_{GL}), et
g) **qu'**au moins un levier (H, M) présente une poche (T) destinée à recevoir une première articulation.

6. Bloc de pesage (B) qui s'étend dans une direction longitudinale (X), dans une direction transversale (Y) orthogonale à la direction longitudinale (X) et dans une direction de hauteur (Z) orthogonale aux deux directions (X, Y), le bloc de pesage (B) comprenant
a) une partie fixe (F) destinée à supporter des guidons ou des leviers,
b) deux guidons (Lₒ, Lᵤ), chacun des deux guidons s'étendant dans la direction longitudinale (X) d'une première région d'extrémité à une seconde région d'extrémité opposée à la première extrémité, chaque guidon (Lₒ, Lᵤ) étant relié à la partie fixe (F) par l'intermédiaire d'au moins une articulation de support (Gs),
c) un dispositif de réception de charge (A) destiné à recevoir une force de poids introduite le long de la direction de hauteur (Z), les deux guidons étant reliés respectivement par leur seconde extrémité au dispositif de réception de charge (A) par l'intermédiaire d'au moins une articulation de guidon (G_{R}), de sorte que le dispositif de réception de charge (A) est guidé parallèlement par rapport à la partie fixe dans la direction de hauteur (Z),
d) en ce que les composants individuels du bloc de pesage (B) sont construits en couches selon le principe de la fabrication générative (impression 3D) et sont réalisés de manière monolithique et cohérente,
e) le bloc de pesage (B) présentant des contre-dépouilles qui sont formées lors de la fabrication générative par des zones dans lesquelles aucune couche de matériau n'est construite,
**caractérisé en ce**
f) **qu'**un premier levier (H) est prévu, lequel s'étend entre une première région d'extrémité (H₁) et une seconde région d'extrémité (H₂), le premier levier (H) se raccordant au niveau de sa première région d'extrémité (H₁) à un élément d'accouplement (K) comprenant au moins une une articulation de charge (G_{L}) pour la transmission d'une force, et le premier levier (H) étant relié à la partie fixe (F) par l'intermédiaire d'une articulation de support (Gs), et aussi bien l'articulation de support (Gs) que l'articulation de charge (G_{L}) formant respectivement un axe de pivotement (A_{GS}, A_{GL}), et
g) **qu'**un second levier (M) est prévu, lequel s'étend entre une première région d'extrémité (M₁) et une seconde région d'extrémité (M₂) et est relié, au niveau de sa première région d'extrémité (M₁), par l'intermédiaire d'un élément d'accouplement (K) présentant une articulation de charge (G_{L}), à la seconde région d'extrémité (H₂) du premier levier (H) et, par l'intermédiaire d'une articulation de support (Gs), à la partie fixe, et aussi bien l'articulation de support (Gs) que l'articulation de charge (G_{L}) formant respectivement un axe de pivotement.

7. Bloc de pesage (B) selon la revendication précédente,
**caractérisé en ce que** l'un des deux leviers (H, M) présente un évidement dans lequel une section de l'autre levier (M, H) est disposée.

8. Bloc de pesage (B) qui s'étend dans une direction longitudinale (X), dans une direction transversale (Y) orthogonale à la direction longitudinale (X) et dans une direction de hauteur (Z) orthogonale aux deux directions (X, Y), le bloc de pesage (B) comprenant
a) une partie fixe (F) destinée à supporter des guidons ou des leviers,
b) deux guidons (Lₒ, Lᵤ), chacun des deux guidons s'étendant dans la direction longitudinale (X) d'une première région d'extrémité à une seconde région d'extrémité opposée à la première extrémité, chaque guidon (Lₒ, Lᵤ) étant relié à la partie fixe (F) par l'intermédiaire d'au moins une articulation de support (Gs),
c) un dispositif de réception de charge (A) destiné à recevoir une force de poids introduite le long de la direction de hauteur (Z), les deux guidons étant reliés respectivement par leur seconde extrémité au dispositif de réception de charge (A) par l'intermédiaire d'au moins une articulation de guidon (G_{R}), de sorte que le dispositif de réception de charge (A) est guidé parallèlement par rapport à la partie fixe dans la direction de hauteur (Z),
d) en ce que les composants individuels du bloc de pesage (B) sont construits en couches selon le principe de la fabrication générative (impression 3D) et sont réalisés de manière monolithique et cohérente,
e) le bloc de pesage (B) présentant des contre-dépouilles qui sont formées lors de la fabrication générative par des zones dans lesquelles aucune couche de matériau n'est construite,
**caractérisé en ce**
f) **que** le dispositif de réception de charge (L) et/ou la partie fixe (F) sont traversés par un évidement s'étendant dans la direction longitudinale (X), dans lequel évidement au moins une articulation, en particulier une articulation de support (Gs), est disposée.

9. Bloc de pesage (B) qui s'étend dans une direction longitudinale (X), dans une direction transversale (Y) orthogonale à la direction longitudinale (X) et dans une direction de hauteur (Z) orthogonale aux deux directions (X, Y), le bloc de pesage (B) comprenant
a) une partie fixe (F) destinée à supporter des guidons ou des leviers,
b) deux guidons (Lₒ, Lᵤ), chacun des deux guidons s'étendant dans la direction longitudinale (X) d'une première région d'extrémité à une seconde région d'extrémité opposée à la première extrémité, chaque guidon (Lₒ, Lᵤ) étant relié à la partie fixe (F) par l'intermédiaire d'au moins une articulation de support (Gs),
c) un dispositif de réception de charge (A) destiné à recevoir une force de poids introduite le long de la direction de hauteur (Z), les deux guidons étant reliés respectivement par leur seconde extrémité au dispositif de réception de charge (A) par l'intermédiaire d'au moins une articulation de guidon (G_{R}), de sorte que le dispositif de réception de charge (A) est guidé parallèlement par rapport à la partie fixe dans la direction de hauteur (Z),
d) en ce que les composants individuels du bloc de pesage (B) sont construits en couches selon le principe de la fabrication générative (impression 3D) et sont réalisés de manière monolithique et cohérente,
e) le bloc de pesage (B) présentant des contre-dépouilles qui sont formées lors de la fabrication générative par des zones dans lesquelles aucune couche de matériau n'est construite,
**caractérisé en ce**
f) **qu'**au moins une section d'un levier (H, M) ou d'une articulation (Gs, G_{R}, G_{L}) ou d'un guidon (Lₒ, Lᵤ), ou de la partie fixe (F) ou du dispositif de réception de charge (A) ou de l'élément d'accouplement (K), de préférence tous les composants du bloc de pesage, sont réalisés sous forme de treillis.

10. Bloc de pesage (B) qui s'étend dans une direction longitudinale (X), dans une direction transversale (Y) orthogonale à la direction longitudinale (X) et dans une direction de hauteur (Z) orthogonale aux deux directions (X, Y), le bloc de pesage (B) comprenant
a) une partie fixe (F) destinée à supporter des guidons ou des leviers,
b) deux guidons (Lₒ, Lᵤ), chacun des deux guidons s'étendant dans la direction longitudinale (X) d'une première région d'extrémité à une seconde région d'extrémité opposée à la première extrémité, chaque guidon (Lₒ, Lᵤ) étant relié à la partie fixe (F) par l'intermédiaire d'au moins une articulation de support (Gs),
c) un dispositif de réception de charge (A) destiné à recevoir une force de poids introduite le long de la direction de hauteur (Z), les deux guidons étant reliés respectivement par leur seconde extrémité au dispositif de réception de charge (A) par l'intermédiaire d'au moins une articulation de guidon (G_{R}), de sorte que le dispositif de réception de charge (A) est guidé parallèlement par rapport à la partie fixe dans la direction de hauteur (Z),
d) en ce que les composants individuels du bloc de pesage (B) sont construits en couches selon le principe de la fabrication générative (impression 3D) et sont réalisés de manière monolithique et cohérente,
e) le bloc de pesage (B) présentant des contre-dépouilles qui sont formées lors de la fabrication générative par des zones dans lesquelles aucune couche de matériau n'est construite,
**caractérisé en ce**
f) **qu'**au moins deux composants (1, 2) du bloc de pesage forment, dans une coupe transversale à une direction (X, Y, Z), en particulier à la direction longitudinale (X), respectivement une section transversale comportant une surface de section transversale constituée de plusieurs surfaces partielles séparées (T₁, T₂), et les enveloppes (V₁, V₂) des deux sections transversales se recouvrant au moins partiellement, et respectivement au moins une surface partielle d'une section transversale se trouvant à l'intérieur de l'enveloppe de l'autre section transversale, et faisant partie des composants : une partie fixe (F), un dispositif de réception de charge (A), un levier (H, M), un élément d'accouplement (K), un guidon, une articulation (G_{L}, G_{S}, G_{R}).

11. Composant d'un bloc de pesage (B) selon l'une des revendications précédentes, le composant étant un levier (H, M) ou une partie fixe (F) ou un dispositif de réception de charge (A) ou une articulation (G_{L}, G_{S}, G_{R}) ou un guidon (Lₒ, Lᵤ) ou un élément d'accouplement (K).

12. Procédé destiné à la fabrication d'un bloc de pesage (B) monolithique selon l'une des revendications précédentes, les composants individuels étant formés par l'application répétée de couches minces de matériau les unes sur les autres (impression 3D), de préférence dans lequel la structure de matériau d'un composant du bloc de pesage est interrompue par la structure de matériau d'au moins un autre composant.

13. Procédé selon la revendication 12, destiné à la fabrication d'au moins un composant monolithique d'un bloc de pesage (B) monolithique selon l'une des revendications 1 à 10, comprenant la fabrication générative (impression 3D) de l'au moins un composant, l'au moins un composant étant un levier (H, M) ou/une partie fixe (F) et/ou un dispositif de réception de charge (A) et/ou une articulation (G_{L}, G_{S}, G_{R}) et/ou un guidon (Lₒ, Lᵤ) ou un élément d'accouplement (K).

14. Bloc de pesage (B) selon l'une des revendications précédentes 1 à 10, **caractérisé en ce que** le bloc de pesage est formé partiellement ou entièrement à partir de métal, de préférence d'aluminium ou d'un alliage d'aluminium.

15. Bloc de pesage (B) selon l'une des revendications 8 à 10,
**caractérisé en ce qu'**un premier levier (H) est prévu, lequel s'étend entre une première région d'extrémité (H₁) et une seconde région d'extrémité (H₂), le premier levier (H) se raccordant au niveau de sa première région d'extrémité (H₁) à un élément d'accouplement (K) comprenant au moins une une articulation de charge (G_{L}) pour la transmission d'une force, et le premier levier (H) étant relié à la partie fixe (F) par l'intermédiaire d'une articulation de support (Gs), et aussi bien l'articulation de support (Gs) que l'articulation de charge (G_{L}) formant respectivement un axe de pivotement (A_{GS}, A_{GL}).
